Europäisches Patentamt

European Patent Office

Office européen des brevets

(19)

(11) **EP 1 376 301 A2**

(12) **EUROPEAN PATENT APPLICATION**

(43) Date of publication:
**02.01.2004 Bulletin 2004/01**

(51) Int Cl.⁷: **G06F 1/00**

(21) Application number: **03010815.3**

(22) Date of filing: **14.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.06.2002 US 180872**

(71) Applicant: **MICROSOFT CORPORATION**
**Redmond, Washington 98052-6399 (US)**

(72) Inventors:
• **Zotto, Benjamin**
  **Seattle, Washington 98102 (US)**
• **Lamb, Steven, D.**
  **Woodinville, Washington 98072 (US)**

• **Multerer, Boyd, C.**
  **Seattle, Washington 98103 (US)**
• **Nikaido, Michio**
  **Issaquah, Washington 98029 (US)**
• **Lau, Keith, K.**
  **Seattle, Washington 98122 (US)**
• **Curtis, Brent. E.**
  **Bellevue, Washington 98088 (US)**
• **VanAntwerp, Mark, D.**
  **Redmond, Washington 98053 (US)**
• **Van, Van, C.**
  **Snoqualmie, Washington 98065 (US)**

(74) Representative: **Grünecker, Kinkeldey,**
**Stockmair & Schwanhäusser Anwaltssozietät**
**Maximilianstrasse 58**
**80538 München (DE)**

(54) **Content access management**

(57) Content access management allows a content request to be received from a device. In response to the content request, both an identifier of a source of the content and one or more keys that allow the device to decrypt the content are sent to the device. The device is then able to retrieve, as it desires, the content from the source and decrypt and use the content.

Fig. 1

EP 1 376 301 A2

**Description**

**TECHNICAL FIELD**

This invention relates to application content, and particularly to managing access to content.

**BACKGROUND**

Dedicated game consoles are becoming increasingly popular. It is anticipated that the storage capabilities of game consoles will grow, allowing for the storage of large amounts of data on the consoles. For example, the recently released Xbox™ video game system allows for large amounts of data storage on a local hard drive. Such increased storage capabilities allow additional content to be downloaded to the video game consoles when playing games with local players (e.g., 1-4 players using the same game system) or with remote players (e.g., over a network, such as Internet-based online gaming).

One problem faced with downloading content to video game consoles and other devices, however, is that care should be taken to ensure that only those consoles (or devices) that are entitled to receive the content (for example, only those that have paid the appropriate fees) are able to receive and use the content. Unfortunately, previous console-based gaming consoles typically did not provide for the ability to download such content, much less provide the ability to restrict the downloading and use of the content to only those consoles that are entitled to do so.

The managing of access to content described below solves these and other problems.

**SUMMARY**

Managing access to content is described herein.

In accordance with one aspect, a content referral request is received from a device. In response to the content referral request, both an identifier of a source of the content and one or more keys that allow the device to decrypt the content are sent to the device.

In accordance with another aspect, a record is maintained of where a plurality of content packages are stored. A record is also maintained of a plurality of keys, wherein each of the plurality of keys can be used to decrypt at least one of the plurality of content packages. For a particular one of the plurality of content packages, which of a plurality of requesting devices can receive an indication of where the content package is stored as well as one of the plurality of keys, wherein the one of the plurality of keys can be used to decrypt the content package, is restricted.

**BRIEF DESCRIPTION OF THE DRAWINGS**

The same numbers are used throughout the document to reference like components and/or features.

Fig. 1 is a block diagram illustrating an exemplary environment in which content access management can be employed.

Fig. 2 is a flowchart illustrating an exemplary process for managing content access.

Fig. 3 is a flowchart illustrating an exemplary process for establishing a secure communication channel between a game console and a device.

Fig. 4 is a block diagram illustrating an exemplary database of Fig. 1 in additional detail.

Fig. 5 is a block diagram of an exemplary online gaming environment.

Fig. 6 illustrates a general computer environment, which can be used to implement the techniques described herein.

Fig. 7 shows functional components of an exemplary game console in more detail.

**DETAILED DESCRIPTION**

The discussion assumes that the reader is familiar with basic cryptography principles, such as encryption, decryption, authentication, hashing, and digital signatures. For a basic introduction to cryptography, the reader is directed to a text written by Bruce Schneier and entitled, "Applied Cryptography: Protocols, Algorithms, and Source Code in C," published by John Wiley & Sons, copyright 1994 (second edition 1996), which is hereby incorporated by reference.

Managing access to content is described herein. A referral source maintains a record of different content that is available for download to devices (e.g., game consoles), as well as which devices and/or users are authorized to download the content and one or more cryptographic keys that can be used to decrypt the content. When a device requests a referral for content that it (and/or its users) is authorized to download, the referral source returns both one or more keys that the device can use to decrypt the content, and an identifier of a source of the content. The device can then retrieve the content from the content source, and decrypt the retrieved content using the one or more keys received from the referral source.

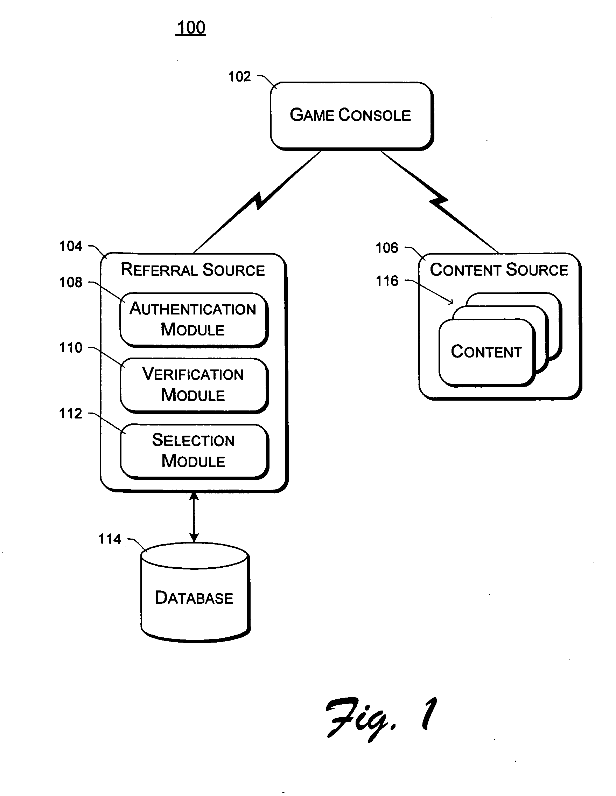

Fig. 1 is a block diagram illustrating an exemplary environment in which content access management can be employed. A game console 102, a referral source 104, and a content source 106 are part of environment 100. Game console 102 is coupled to referral source 104 via any of a variety of couplings allowing communication between game console 102 and referral source 104. Similarly, game console 102 is coupled to content source 106 via any of a variety of couplings allowing communication between game console 102 and content source 106. In one implementation, the couplings can include one or more networks, such as the Internet, a local area network (LAN), a wide area network (WAN), etc. Although only a single game console 102, a single referral source 104, and a single content source 106 are shown in Fig. 1, multiple consoles 102, multiple referral sources 104, and/or multiple content sources 106 can be included in environment 100.

It should be noted that content source 106 can be a remote device, or alternatively a local device. A remote content source 106 can be, for example, a server device accessible to game console 102 via a network (such as the Internet, a LAN, a WAN, etc.). A remote content source 106 can be any type of computing device capable of providing content to game console 102. Such a computing device can be, for example, a server device, a workstation, a desktop PC, another game console, and so forth. A local content source 106 is a source that is locally accessible to game console 102. For example, a local content source 106 can be a removable optical disk, a removable magnetic disk, a removable nonvolatile memory device (such as a flash memory device), and so forth.

Generally, in environment 100, game console 102 sends a content referral request to referral source 104. Referral source 104 authenticates the requester (the game console 102 and/or the user(s) of the game console 102) and verifies that the requester is permitted to access the requested content. Once the requester is authenticated and verified, referral source 104 selects a location from which game console 102 can obtain the requested content. Referral source 104 sends an identifier of this location, as well as one or more keys that can be used to decrypt the content, to game console 102. Game console 102 then retrieves the content from the source at the identified location, and decrypts the content using the one or more keys received from referral source 104.

Referral source 104 includes an authentication module 108, a verification module 110, and a selection module 112. Referral source 104 can include multiple servers, each of which may include modules 108, 110, and 112, or alternatively modules 108, 110, and 112 may be situated on different servers. In situations where referral source 104 includes multiple servers, the multiple servers can be coupled to one another via a variety of networks, such as the Internet, a LAN, a WAN, etc.

Authentication module 108 is responsible for authenticating that the requester of content is indeed the user and/or game console that it is claiming to be. Authentication module 108 may include the components and have access to the data to perform this authentication itself, or alternatively may access and rely on another device for this authentication. In one exemplary implementation, a security gateway is situated between referral source 104 and game console 102 and is relied upon by authentication module 108 to perform this authentication, as discussed in more detail below.

Verification module 110 is responsible for verifying that a particular requester is permitted to access requested content. A variety of different criteria can be used by verification module 110 in performing this verification. Examples of such criteria include: whether the requester has paid the appropriate fee; whether the requester is associated with a region in which the content can be used; whether the application running on the game console at the time of the request is permitted to access the content; whether the requester is permitted to access content having the rating of the requested content (e.g., based on the well-known ESRB (Entertainment Software Rating Board) ratings); whether the requestor is old enough to access the content; whether the requestor has been granted rights to the content (e.g., by another user, as a result of winning a tournament, as contest prize, etc.); and so on.

Selection module 112 is responsible for determining which of multiple sources a particular requester should retrieve particular content from. The same content may be available from multiple different content sources 106. In these situations, selection module 112 uses various criteria to determine from which of these multiple different content sources a particular requester should retrieve that content. Examples of such criteria include: a rank assigned to each source to indicate the preference to be given to that source relative to the other sources; a geographic location of the requester (e.g., a source located closest to the requester is selected); current availability of the different sources; current traffic at or load on the different sources; cost of using the different sources; a subscription level of the requestor (e.g., premium subscribers (a game console and/or users of the game console) that pay higher fees can be directed to sources using faster servers or having lighter loads); quality of service (e.g., including one or more of geographic proximity, network performance, referred subscriber status, etc.); and so forth.

Thus, it can be seen that referral source 104 maintains a record of where various content is stored, maintains a record of which requesters are permitted to access the content, and also controls distribution of the various keys needed to decrypt the content. These various records and information maintained by referral source 104 is saved in a database 114 accessible to source 104.

Content source 106 can store one or more pieces of content 116. Each of these pieces may be encrypted with the same key, or alternatively a different key. The content can be stored in any of a variety of manners, such as in a database, in a file directory, on different removable disks, and so forth. Each piece of content 116 can be virtually any type of content for an application (e.g., for a game, audio and/or video playback application, reference or productivity application, etc.). Examples of such content include: an entire game (or other application) itself; segments of a game (e.g., new episodes for a game); statistics for a game (e.g., this week's current NFL statistics during the football season); features for a game (e.g., weapons, characters, levels, tracks, vehicles, etc.); modules to correct problems or bugs in the modules originally shipped with the application; combinations thereof; and so forth. Additionally, how much content is stored as a piece of content can vary (e.g., based on the desires of the content developer and/or game designer). For example, one piece of content may include only new weapons while another piece of content may include only new characters, while still another piece of content includes both new tracks and new vehicles.

It should be noted that although the managing of access to content is discussed herein primarily with reference to a game console, the game console may also incorporate additional functionality. For example, the game console may include digital video recording functionality so that it can operate as a digital VCR, the game console may include channel tuning functionality so that it can tune and decode television signals (whether they be broadcast signals, cable signals, satellite signals, etc.), and so forth. Additionally, the managing of access to content described herein can be used with devices other than game consoles, such as desktop computers, workstations, servers, notebook computers, portable or handheld computers, Internet appliances, cellular telephones, personal digital assistants (PDAs), and so forth.

It should further be noted that the discussions herein referring to games and/or game titles apply analogously to other types of applications.

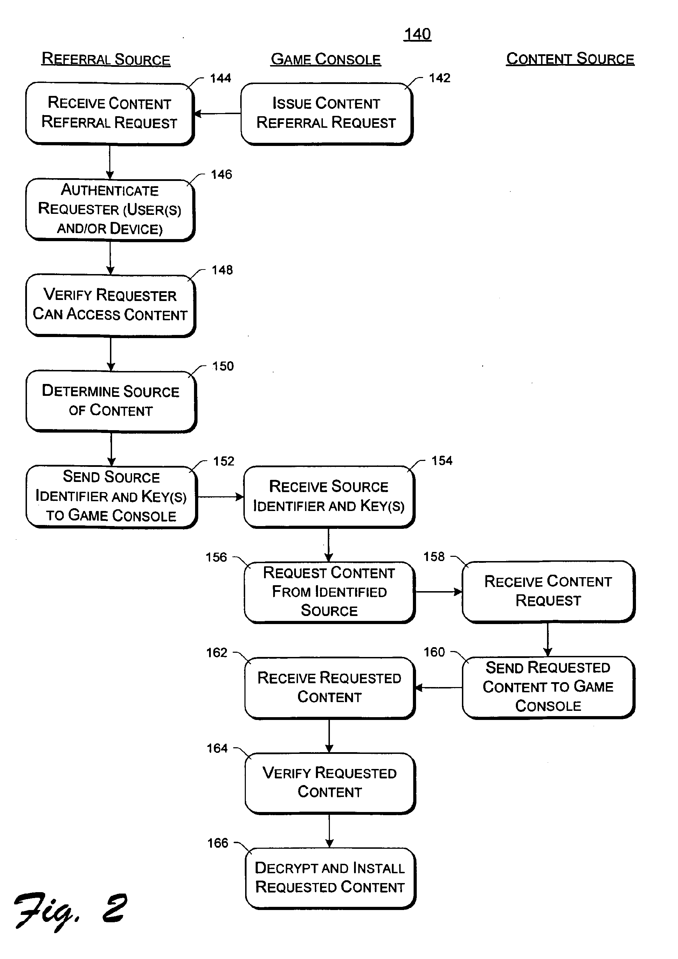

Fig. 2 is a flowchart illustrating an exemplary process 140 for managing content access. The process of Fig. 2 is implemented by a referral source (e.g., source 104 of Fig. 1), a game console (e.g., game console 102 of Fig. 1), and a content source (e.g., source 106 of Fig. 1). The acts performed by the referral source are shown on the left-hand side of Fig. 2, the acts performed by the game console are shown in the middle of Fig. 2, and the acts performed by the content source are shown on the right-hand side of Fig. 2. The process of Fig. 2 is discussed with reference to components of Fig. 1.

Initially, game console 102 issues a content referral request (act 142). The content referral request is a request for a referral to a source(s) of the particular content. Alternatively, game console 102 may simply request the content itself from referral source 104 and instead receive a referral to a source(s) of the content. The content referral request includes an identifier of the user(s) of game console 102 at the time the request is made, an identifier of the application (e.g., game title) running on game console 102 at the time the request is made, an identifier of the game console 102 making the request, an identifier of the content being requested, and a current setting of the game console's maximum ESRB rating.

Referral source 104 receives the content referral request (act 144), and authentication module 108 authenticates the requester (act 146). As discussed above, this authentication may be an authentication of game console 102 and/or the user(s) of game console 102. If the requester cannot be authenticated, then process 140 stops at act 146. An indication may be returned to the requester that the requester cannot be authenticated, or alternatively the referral request may be ignored and no indication of such returned to the requester.

Assuming the requester is authenticated, verification module 110 verifies that the requester can access the requested content (act 148). As discussed above, various criteria may be used in performing this verification (e.g., whether the appropriate fee has been paid, whether the requester is associated with a particular geographic region, and so forth). If the requester is not permitted to access the content, then process 140 stops at act 148. An indication may be returned to the requester informing the requester that it is not permitted to access the content, optionally including an indication as to why the requester is not permitted to access the content. Alternatively, no such indication may be returned to the requester.

Assuming the requester is verified as being permitted to access the content, selection module 112 determines a source for the content (act 150). As discussed above, various criteria may be used in making this determination. Once the source for the content is determined, selection module 112 sends an identifier of the source as well as one or more keys that can be used to decrypt the content (once it is received from the source) to the game console (act 152). Game console 102 receives the source identifier and key(s) (act 154) and requests the content from the identified source (act 156).

The content request is received at the content source 106 (act 158). In response to the request, content source 106 accesses the requested content and sends the requested content to game console 102 (act 160). Game console 102 receives the requested content (act 162) and verifies that the received content is indeed from the content source 106 (act 164).

In one implementation, this verification in act 164 is performed using public/private key encryption and a digest. Content source 106 stores, for each piece of content that it stores, a digest of that content. The digest of a piece of content can be generated in any of a variety of conventional manners, such as by using a conventional hashing algorithm (e.g., Message Digest 2 (MD2), MD5, Secure Hash Algorithm (SHA), SHA-1, etc.). The digest for a piece of content may be generated by content source 106, or alternatively by another device and communicated to content source 106 (e.g., along with the piece of content). Content source 106 also has a public/private key pair associated with it, and uses its private key to encrypt each such digest.

When sending requested content to game console, content source 106 also sends the encrypted digest of the content. As part of the verification in act 164, game console 102 uses the public key associated with content source 106 to decrypt the encrypted digest it received from content source 106. Game console 102 then generates a digest for the received content (using the same algorithm as was used to generate the digest stored by content source 106) and compares this generated digest to the decrypted digest. If the two digests are the same, then the content is verified as being from content source 106 (also referred to as authenticating the content), as it is presumed that no other device would have been able to encrypt the digest in such a manner as to allow the digest to be decrypted with the public key of content source 106. The two digests being the same further verifies that the requested content has not been altered since it was transferred from content source 106.

Game console 102 is aware of both the public key of the public/private key pair of content source 106, and, if generating a digest of the content, the algorithm used to generate the digest of the content. Game console 102 can be made aware of the public key and the algorithm to generate the digest in a variety of manners. For example, the public key and algorithm may be included in the response from the referral source (e.g., in acts 152 and 154 of Fig. 2), game console 102 may access well-known locations to obtain the public key and algorithm, and so forth.

If the received content is not verified, then the content is not used by game console 102. Game console 102 may repeat its request for the content from the source, or alternatively try a different source (optionally repeating the request in act 142 but with an indication to referral source 104 that a source other than the previously identified source is desired). However, if the received content is verified, then game console 102 decrypts and installs the received content (act 166). The installation may be simply storing of the decrypted content, or alternatively other operations may be performed on the decrypted content to prepare it for storage. The exact nature of such installation operations can vary by application (e.g., game title), by the nature of the content, and/or by the desires of the application (e.g., game title) developer.

The content can be stored in any of a variety of manners, such as to a local hard drive, to a local nonvolatile memory (e.g., a flash memory), to a rewriteable and/or recordable optical disk, and so forth. It should be noted that once the requested content is decrypted in act 166, the key(s) received from referral source 104 in act 154 is no longer needed. Game console 102 may optionally encrypt the content it stores using its own encryption key(s), and/or may impose other security measures to protect the content it stores.

In one implementation, the key used to decrypt the content is a symmetric key, while the key used to decrypt the digest of the content is a public key of a public/private key pair. Alternatively, a public/private key pair may be used to encrypt and decrypt the content itself, or a symmetric key may be used to encrypt and decrypt the digest of the content.

Process 140 is illustrated with referral source 104 determining which of multiple sources game console 102 should retrieve the content from (in act 150). Alternatively, identifiers of all of the possible sources (and optionally their ranks) may be returned to game console 102. Game console 102 can then determine which source to access and, if that source is not accessible for some reason (e.g., due to a hardware failure at the source or a network failure), then another source can be selected and tried.

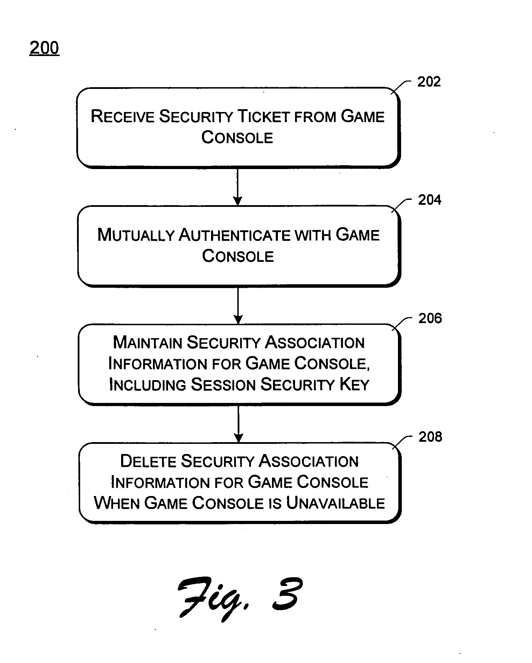

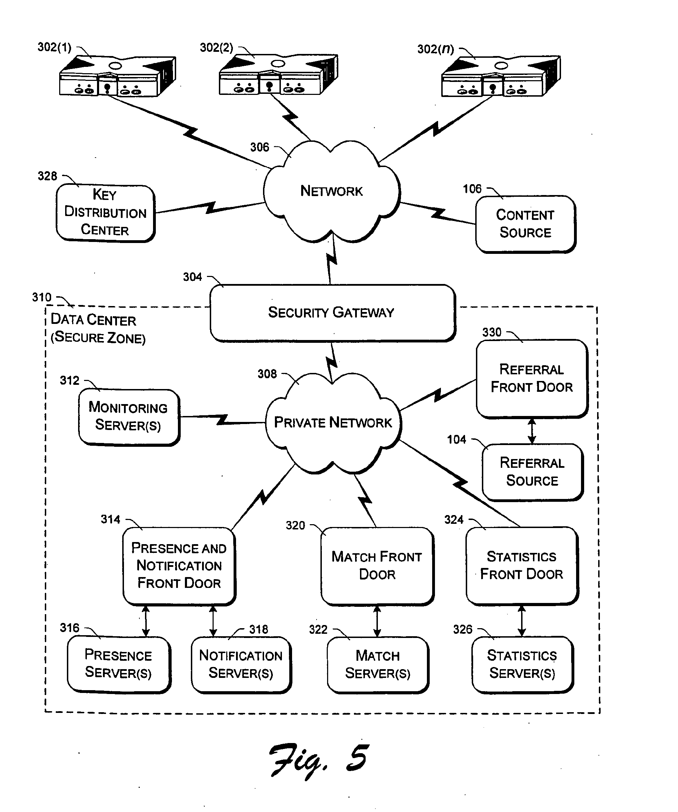

Fig. 3 is a flowchart illustrating an exemplary process 200 for establishing a secure communication channel between a game console and a device (e.g., a referral source 104 of Fig. 1, or an intermediary device such as a security gateway discussed below with reference to Fig. 5). By establishing a secure communication channel between the game console and the device, the game console identifier as well as the identifier(s) of the user(s) of the current users of the game console can be authenticated (e.g., in act 146 of Fig. 2). The process of Fig. 3 may be performed in software, firmware, hardware, or combinations thereof. It should be noted that although a particular process for establishing a secure communication channel is discussed with reference to Fig. 3, alternatively any of a variety of other conventional processes can be used to establish the secure communication channel.

Initially, a security ticket is received at the device (act 202). In one exemplary implementation, the security ticket is a Kerberos ticket obtained from a key distribution center (shown below in Fig. 5). The Kerberos ticket is obtained by game console 102 using a Kerberos-like authentication protocol that authenticates, in a single ticket, the identities of the particular game console 102 and the one or more user identities playing at the game console 102. The game console 102 obtains the Kerberos ticket as follows.

For discussion purposes, suppose there are four users of the game console 102. Each user is given an identity $U_1$, $U_2$, $U_3$, and $U_4$ and is assigned a user key $K_1$, $K_2$, $K_3$, and $K_4$. The game console 102 is also assigned its own identity C and a game console key $K_c$. Additionally, the game title, such as a game disc, is assigned a separate identity G. In a similar manner, the device (e.g., referral source 104 or a security gateway) is assigned its own identity A and a key $K_A$. It should be noted that the authentication of users, game consoles, and the security gateway is dependent in part on the keys $K_1$, $K_2$, $K_3$, and $K_4$, $K_C$, and key $K_A$. Therefore, care should be taken in selecting and storing these keys so that only the entities that they are assigned to are able to use them.

Game console 102 generates validated user identities based on the user identities $U_1$, $U_2$, $U_3$, and $U_4$ and user keys $K_1$, $K_2$, $K_3$, and $K_4$. More specifically, the validated user identities include the user identities and values derived from the user keys. The validated user identities will be submitted with a request to the key distribution center and used to demonstrate to the key distribution center that the game console has knowledge of the user key and hence, implicitly authenticates the users.

$H = H_{Ky}(M)$ : H is a keyed one way hash (MAC) of the message M using the key $K_Y$. Any MAC algorithm can be used. One example of such a MAC algorithm is the HMAC algorithm according to IETF RFC 2104.

EncryptedM = $E_{Ky}(M)$ : EncryptedM is the encrypted form of message M using the key $K_Y$. Any encryption algorithm can be used. Examples of such encryption algorithms include DES, triple DES, and RC4-HMAC.

$M = D_{Ky}(EncryptedM)$ : M is the original message of EncryptedM before being encrypted using the same key $K_Y$.

One way to generate the key derivative value is to compute a cryptographic hash of the user key using the key of the game console. For user $U_1$ with key $K_1$, a hash $H_1$ is computed as follows :

$$H_1 = H_{Kc}(K_1)$$

The hash $H_1$ forms the key derivative value. Another way is to encrypt the current time using the user key $K_1$, as follows:

$$H_1 = E_{K1}(T)$$

Once again, the resulting value $H_1$ forms the key derivative value. The validated user identity is the combination of the user identity $U_1$ and the corresponding key derivative value $H_1$:

$$\text{Validated User Identity} = (U_1, H_1).$$

Game console 102 constructs a request containing the game console identity C, the game title identity G, the online service identity A of the device, and multiple validated user identities $(U_1, H_1)$, $(U_2, H_2)$, $(U_3, H_3)$, and $(U_4, H_4)$. The request has the following identity string:

$$\text{Request} = [C, G, A, (U_1, H_1), (U_2, H_2), (U_3, H_3), (U_4, H_4)]$$

Additionally, the request may include a version of the authentication protocol and a random nonce generated by the game console to resist replay attacks. The request may further include a checksum value to be used to verify receipt of the entire identity string. Game console 102 submits the request over the network to the key distribution center.

The key distribution center evaluates the request as well as the identities contained in the request. The key distribution center generates a random session key to be used for the device. In this example, the key distribution center generates a random session key $K_{CA}$ to be used by game console 102 in communicating with the device (in act 202).

The key distribution center generates a ticket that will subsequently be presented by game console 102 to the device. There is one ticket issued for the device, but the ticket is effective for multiple users. The ticket contains the identity string submitted in the request. It also includes a time $T_G$ that the ticket is generated, a time $T_L$ identifying the time length before expiration of the ticket, the randomly generated session key $K_{CA}$ for the device, and optionally a service map $S_m$ identifying the service devices in a data center (not shown in Fig. 1) that the users of game console 102 are permitted to access. The key distribution center maintains a record, or accesses another device or center that maintains a record, of which users are permitted to access which services (e.g., which users have paid a premium to access one or more premium services). The ticket contents are encrypted via a symmetric key cipher (e.g., Triple DES) that utilizes the security gateway device's key $K_A$, as follows:

$$\text{Ticket} = E_{KA}[T_G, T_L, K_{CA}, S_m, C, G, A, U_1, U_2, U_3, U_4]$$

Notice that the ticket does not carry the corresponding key derivative values $H_i$. Once the key distribution center reads the key derivative values and believes the game console knows the user keys, the key distribution center places the identities of the users within the issued tickets. The device will subsequently believe in whatever the ticket tells it and hence does not need to see the key derivative values $H_i$.

The key distribution center returns the generated ticket to game console 102. Since game console 102 does not know the device's key $K_A$, game console 102 cannot open the ticket and alter the contents. The key distribution center also returns a session security key in an attached encrypted message. The session key message contains the ticket generation time $T_G$, the ticket expiration length $T_L$, and the session security key $K_{CA}$, and all contents of the message are encrypted using the game console's key $K_C$, as follows:

$$\text{Session Key Message} = E_{KC}[T_G, T_L, K_{CA}]$$

Since the session key message is encrypted with the game console's key $K_C$, the game console 102 is able to open the session key message and recover the session time parameters and session keys.

Once game console 102 receives the ticket, game console 102 can use the ticket to perform a secure key exchange with mutual authentication with the device (act 204). Additional information regarding the secure key exchange can be found in co-pending U.S. Patent Application No. , Attorney Docket No. MS1-1149US, entitled "Secure Key Exchange with Mutual Authentication", which was filed June 10, 2002 in the names of Dinarte R. Morais, Ling Tony Chen, Damon V. Danieli, and which is hereby incorporated by reference.

The key exchange allows a new secret to be derived by the game console 102 and the device that is shared between console 102 and the device but is not transmitted between the two devices and cannot be deduced by a third party (e.g., another device on the same network as console 102 and the device) based on the roundtrip traffic between console 102 and the device. In one exemplary implementation, the devices use Diffie-Hellman exponentiation operations to derive the new secret. Additional information regarding Diffie-Hellman can be found in W. Diffie and M. E. Hellman, "New directions in Cryptography", IEEE Transactions on Information Theory v. IT-12, n. 6 Nov 1976, pp. 644-654.

Generally, the secure key exchange is performed by game console 102 generating a key exchange initiator packet and sending the packet to the device. The device receives the key exchange initiator packet and validates the received packet. Once the packet is validated, the device generates the cryptographic keys to be used to secure communications with game console 102. In an exemplary implementation, these cryptographic keys are security association keys used to secure point-to-point communication between two devices. The device then generates a key exchange response packet and sends the generated packet to game console 102. Game console 102 receives the key exchange response packet and validates the received packet. Once the packet is validated, game console 102 generates the cryptographic keys to be used to secure communications with the device. The cryptographic keys are the same as those generated by the device. Thus, both game console 102 and the device end up with the same cryptographic keys, but do so without actually transmitting the keys between them.

Game console 102 generates and sends a key exchange initiator packet by initially generating a key exchange initiator message. The key exchange initiator message includes a random (or pseudo-random) value generated by game console 102 referred to as NonceInit, and also includes the Diffie-Hellman ($g^X$ mod N) value, where X is also a random (or pseudo-random) number generated by game console 1.02, and a Security Parameters Index value ($SPI_1$) that will be used to uniquely define this console/security device communication channel once the key exchange process is complete, as follows:

$$\text{InitMess} = [\text{NonceInit}, SPI_1, (g^X \bmod N)].$$

Game console 102 then computes a digest of the key exchange initiator message using the Kerberos session key $K_{CA}$ received from the key distribution center. The digest is generated as follows:

$$\text{HashInitMess} = H_{K_{CA}}[\text{InitMess}].$$

Alternatively, a generic one way hash (that is not keyed) could also be used in the computation of HashInitMess. The security of the key exchange does not rely on whether this hash is keyed or not.

Game console 102 then generates a Kerberos authenticator. The Kerberos authenticator includes a timestamp (e.g., the current time of game console 102) and the HashInitMess digest. The timestamp is incremented by game console 102 every time device 102 generates a Kerberos authenticator, thereby allowing the device to better detect replay attacks. Game console 102 encrypts the Kerberos authenticator using the Kerberos session key $K_{CA}$, as follows:

$$Auth_T = E_{K_{CA}}[\text{Time, HashInitMess}].$$

Game console 102 then generates a key exchange initiator packet. The key exchange initiator packet includes the key exchange initiator message InitMess, the encrypted Kerberos authenticator $Auth_T$, and the Kerberos ticket for the device received from the key distribution center. As discussed above, the Kerberos ticket includes at least the Kerberos session key ($K_{CA}$), a range of time during which the ticket is valid, and a unique number that identifies game console 102, all encrypted using a secret key shared by the key distribution center and the device. The SPI value identifies the security association or communication channel between game console 102 and the device. The $SPI_1$ value is associated with communications from the device to game console 102, and an $SPI_2$ value is associated with communications from game console 102 to the device. The key exchange initiator packet is thus as follows:

$$\text{InitPacket} = [\text{InitMess, Auth}_T, \text{Ticket}].$$

It should be noted that the combination of the authenticator and the ticket is referred to as the AP Request in Kerberos terminology. Game console 102 then sends the key exchange initiator packet to the device.

The device receives the key exchange initiator packet InitPacket. In one implementation, the device expects all key exchange initiator packets to be in a predetermined format and of a predetermined size. Any key exchange initiator packet not in this predetermined format or of the predetermined size is ignored by the device. Alternatively, the device may allow key exchange initiator packets to be in a variety of formats and/or of a variety of sizes.

Once the key exchange initiator packet is received, the device decrypts the Kerberos ticket, using the key that the device shares with the key distribution center. The device then checks the decrypted ticket to determine whether ticket is stale. If the current time is included in the range of times during which the ticket is valid (as identified in the ticket), then the ticket is not stale. However, if the current time is not included in the range of times during which the ticket is valid, then the ticket is stale. If the Kerberos ticket is stale, then the key exchange process fails, resulting in no security association being established between game console 102 and the device. The device may notify game console 102 that the key exchange process has failed, or alternatively the device may just delete the received InitPacket and not notify game console 102.

However, if the Kerberos ticket is not stale, then the device decrypts the Kerberos authenticator $Auth_T$ using the Kerberos session key $K_{CA}$ recovered from the decrypted Kerberos ticket. The device then accesses the timestamp Time in the Kerberos authenticator and checks whether the timestamp is acceptable. The timestamp is acceptable if it is not too far out of synchronization with the current time on the device. In an exemplary implementation, if the timestamp is within a threshold amount of time (e.g., 5 minutes, which is the recommended Kerberos time skew) from the current time on the device, then the timestamp is acceptable. If the timestamp is not acceptable, then the key exchange process fails.

If the timestamp is acceptable, then the device computes the digest of the key exchange message InitMess. The device computes the digest in the same manner as game console 102 computed the digest HashInitMess. The device then checks whether the digest value it computed matches (is equal to) the digest value received from game console 102 as part of the encrypted Kerberos authenticator $Auth_T$. If the two digest values are the same then it serves to confirm that the key exchange message InitMess has not been altered between game console 102 and the device (e.g., the key exchange message InitMess has not been tampered with). If the two digest values do not match (in other words, if the two digest values are not equal), then the key exchange process fails.

However, if the received and computed digest values match, then the device checks whether the Kerberos authenticator has been replayed. The device keeps a record of the timestamps from each Kerberos authenticator it receives from each game console C (which is revealed in the Kerberos ticket). If the device receives a Kerberos authenticator with a timestamp Time that is not newer than the last timestamp recorded by the device, then the device knows that the Kerberos authenticator has been replayed. If the Kerberos authenticator has been replayed, then the key exchange initiator packet is not valid and the key exchange process fails. However, if the Kerberos authenticator has not been replayed, then the key exchange initiator packet has been validated by the device. If all these tests are satisfied and the key exchange initiator packet is validated, then the device has authenticated game console 102 as really being the device it claims to be - the device has verified that game console 102 has knowledge of the Kerberos session key $K_{CA}$.

Initially, the device generates cryptographic keys based on the key exchange initiator message InitMess, the Kerberos session key $K_{CA}$, the nonce from game console 102 (NonceInit), and a nonce generated by the device (NonceResp). The device generates a random (or pseudo-random) number Y, as well as a random value referred to as NonceResp. The device further computes the Diffie-Hellman value ($g^{XY}$ mod N) as well as the Diffie-Hellman value ($g^Y$ mod N). At this point, the device has enough data to compute security association keys. The security association keys are used to secure point-to-point communication between two consoles. In an exemplary implementation, the device uses the two Diffie-Hellman values (($g^X$ mod N) and (Y)) to compute the function ($g^{XY}$ mod N). The device can then compute various digests using various algorithms based on the values NonceInit, NonceResp, ($g^{XY}$ mod N), and the Kerberos session key $K_{CA}$. These digests are then used to form the security association keys. In one exemplary implementation, the device computes four different digests using NonceInit, NonceResp, and ($g^{XY}$ mod N) as input, as well as the Kerberos session key $K_{CA}$, to be used as the security association keys for authenticating and encrypting/decrypting all secure packets in both directions (one key for authentication, one key for encryption, times two for each direction totals four). Alternatively, the session key $K_{CA}$ itself may be used for authenticating and/or encrypting/decrypting secure packets in both directions.

The device then generates a key exchange response message. The key exchange response message contains NonceInit, the timestamp Time received from game console 102, NonceResp, the Diffie-Hellman value ($g^Y$ mod N), and an $SPI_2$ value as follows:

$$RespMess = [NonceInit, SPI_2, NonceResp, (g^Y\ mod\ N)].$$

The $SPI_2$ value is generated by the device and is associated with all communications from game console 102 to the device. The device then computes a digest of the response message using the Kerberos session key and a hash function H, as follows:

$$HashRespMess = HK_{CA}\ [RespMess].$$

The hash function H used to generate HashRespMess may be the same as the hash function H used to generate HashInitMess (discussed above), or alternatively a different hash function.

The device then generates a Kerberos reply message including both the computed hash digest and the timestamp Time from the Kerberos authenticator, as follows:

$$ReplyMess = [HashRespMess, Time].$$

The device then encrypts the Kerberos reply message ReplyMess using an encryption algorithm E (e.g., Triple DES) and the Kerberos session key $K_{CA}$ as follows:

$$EncryptedReplyMess = E_{K_{CA}}\ [ReplyMess].$$

The encryption algorithm E used to generate EncryptedReplyMess may be the same encryption algorithm as used to generate $Auth_T$ (discussed above), or alternatively a different encryption algorithm.

The device then generates a key exchange response packet that includes the key exchange response message RespMess, and the encrypted Kerberos reply message EncryptedReplyMess, as follows:

$$RespPacket = [RespMess, EncryptedReplyMess].$$

The device then sends the key exchange response packet RespPacket to game console 102.

Game console 102 receives the key exchange response packet RespPacket from the device. Game console 102 decrypts the Kerberos reply message EncryptedReplyMess using the Kerberos session key $K_{CA}$. Game console 102 then checks whether the timestamp Time in the decrypted reply message matches the timestamp Time that game console 102 sent to the device. If the timestamps match (in other words, if the timestamps are equal), then the matching confirms that the device was able to decrypt the Kerberos ticket and the Kerberos authenticator (and thus has knowledge of the Kerberos session key $K_{CA}$), and therefore really is the device that it claims to be. The device is thus authenticated to game console 102 if these timestamp values match.

If the timestamp values do not match, then the key exchange process fails, resulting in no security association being established between game console 102 and the device (analogous to the discussion above, game console 102 may or may not notify the device that the key exchange process has failed). However, if the timestamp values do match, then the device is authenticated to game console 102 and game console 102 proceeds to compute the digest of the key exchange response message RespMess using the Kerberos session key $K_{CA}$. Game console 102 computes the digest in the same manner as the device computed HashRespMess (discussed above). Game console 102 then checks whether the digest value it computed matches (is equal to) the digest value received from the device as part of the encrypted Kerberos reply message EncryptedReplyMess. If the two digest values are the same then it serves to confirm that the key exchange response message RespMess has not been altered between the device and game console 102 (e.g., the key exchange response message RespMess has not been tampered with). If the two digest values do not match (in other words, if the two digest values are not equal), then the key exchange process fails.

However, if the two digest values do match, then game console 102 generates the cryptographic keys based on the Kerberos session key $K_{CA}$, NonceInit, NonceResp, and $g^{XY}$ mod N. Analogous to the discussion above regarding the device generating cryptographic keys, game console 102 now has enough data to calculate the Diffie-Hellman value ($g^{XY}$ mod N), and to compute the security association keys. The security association keys computed by game console 102 are the same as, and are calculated in the same manner as, those generated by the device. Note that $g^{XY}$ mod N is computed from $g^Y$ mod N and X on the game console. Also note that, analogous to the discussion above, the session key $K_{CA}$ itself may alternatively be used for authenticating and/or encrypting/decrypting secure packets in both directions.

Once game console 102 has the security association keys, device 102 is free to transmit any packets that have been waiting for key exchange to complete. The device, however, is not free to do so even though it has the same set of keys because it cannot be sure that its response message RespMess was not lost. The device waits until it receives a packet authenticated with the computed security association key from game console 102, or optionally until it receives an Acknowledge packet (AckPack) from game console 102.

In the common case, game console 102 sends a packet to the device and thus, the key exchange process consists of just two packets - InitPacket and RespPacket. Alternatively, should game console 102 not have a packet to send, game console 102 will send an artificial acknowledge packet (denoted as "AckPack"). This packet differs from the two other key exchange packets in that the AckPack is hashed using the computed security association key instead of the Kerberos session key $K_{CA}$.

From this point forward, game console 102 and the device can use the security association keys to secure communications. All network packets that need to be transmitted to the other are authenticated after optionally being encrypted, with the receiving device verifying the authentication data before decrypting the packet contents. Either of console 102 and the device can disregard key-exchange packets from the other side containing the same Nonces.

The device maintains a record 172 of the security association information for game console 102 (act 206). This record includes the security keys (the security association key(s) and/or the session security key $K_{CA}$) to be used in encrypting data packets sent to game console 102 and decrypt data packets received from game console 102, the service mapping identifying which service devices in data center 110 that game console 102 is permitted to access, a fully qualified game console address (also referred to as an XNADDR), and Security Parameters Index (SPI) values.

As part of the mutual authentication of act 204, game console 102 generates an SPI value, referred to as $SPI_1$ that it includes in the key exchange packet that it sends to the device. Similarly, the device generates a value $SPI_2$ that it includes in the key exchange response packet sent to game console 102. The $SPI_1$ value allows game console 102 to identify the secure communications channel between game console 102 and the device as the particular channel to which the data packets sent by gateway the device correspond. All secure channel packets (after the key exchange) from the gateway the device to the game console 102 will contain the $SPI_1$ value to identify the channel. Similarly the $SPI_2$ value allows the device to identify the secure communications channel between game console 102 and the device as the particular channel to which the data packets sent by security game console 102 correspond. All secure channel packets (after the key exchange) from the game console 102 to the gateway the device will contain the $SPI_2$ value to identify the channel. Each secure communications channel, even though between the same game console 102 and the device, typically has two different SPI values (one in each direction).

In one implementation, all packets to and from the device always contain an SPI value at the very beginning of the packet to specify which security channel the packet is for (so that the device or game console 102 can use this value to lookup the corresponding key to decrypt the packet). For key exchange initiator and response packets, this leading SPI is set to a value of zero to indicate that this is a key exchange packet that does not have a corresponding SPI number established yet. However, included within the key exchange packet itself is the new proposed SPI value (which is non-zero) to use after the key exchange is complete. So key exchange packets actually contain two SPI values, the outer one (which is zero), and the inner one (which is non-zero).

The fully qualified address for game console 102 includes: the Ethernet MAC address for game console 102; the local IP address of the game console 102 (this is the IP address that the game console 102 believes it has, and may be different than the IP address from which the device receives data packets from game console 102 (e.g., due to a NAT device, such as a router, situated between game console 102 and the device)); the IP address and port from which the device receives data packets from game console 102 (this may be the same as the local IP address of the game console 102, or alternatively different (e.g., the address of a NAT device)); a logical security gateway device number (an identifier assigned to the security gateway device to uniquely identify the security gateway device within the security gateway cluster); an SPI value (e.g., $SPI_1$ and/or $SPI_2$); and a game console id (the game console identity C discussed above). The contents of the fully qualified address can be determined based on the security ticket received from game console 102 as well as on the information embedded in data packets received from game console 102.

In one implementation, where the device is a security gateway device (discussed below with reference to Fig. 5), as part of the authentication in act 204 a unique data center visible IP address (an address used internally by the data center is assigned to the game console from a pool of addresses available to the security gateway device. The unique data center visible IP address is used by the security gateway device when forwarding packets across the public/private network boundary. Packets are received from the game console and are forwarded inside the data center (on the private network ) with the source IP address listed as this data center visible IP address. When a server in the data center replies to this traffic, the reply is routed back to the security gateway device that is assigned the address range that includes the target IP address of the reply. The security gateway device reverses the NAT process by looking up the security association for the game console that was assigned the target IP address, and forwards the reply back to the designated game console, with the reply's source address altered to be the internet address of the security gateway.

The device maintains the security association information for game console 102 until the game console is no longer available (whether the game console 102 voluntarily logs out or becomes otherwise unavailable), at which point the device deletes the security association information for game console 102 (act 208). The device uses this maintained security association information in communicating with game console 102, as discussed in more detail below. The security association information, including the session security key and/or security association key(s), is thus maintained only for each session - each time game console 102 logs in to the device a new security association is generated.

Process 200 of Fig. 3 discusses use of a security ticket, such as a Kerberos ticket, to establish a mutually authenticated secure communication channel between the game console and the security gateway device. Alternatively, other processes may be used to establish the secure communication channel. The purpose of the secure communication channel is to allow a particular game console and a particular device to communicate with one another in a manner that prevents other devices from interpreting or modifying the data being communicated within the channel.

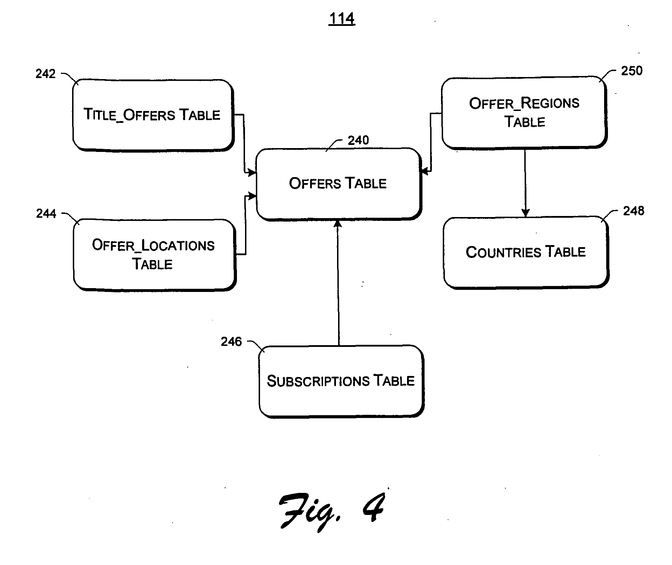

Fig. 4 is a block diagram illustrating an exemplary database 114 of Fig. 1 in additional detail. Database 114 includes an offers table 240, a title_offers table 242, an offer_locations table 244, a subscriptions table 246, a countries table 248, and an offer_regions table 250. These various tables 240 - 250 are used to store the various information maintained by referral source 104 of Fig. 1. In alternate implementations database 114 can store additional information, however, this such additional information has not been shown so as to avoid cluttering the drawings.

Tables 240 - 250 make reference to an offer_id. An offer_id identifies a particular piece of content, also referred to herein as a content package. The content package may be just the piece of content itself, or alternatively may include the encrypted digest of the content. In one implementation, an offer_id is a 64-bit value with the high 32 bits being an identifier of the game title that is initially responsible for making the content available (e.g., the game title for which the content was originally or primarily designed). This 32-bit game title identifier uniquely identifies the game throughout the world. Of the low 32 bits of the offer_id, 27 bits are made available to the game title - the game developers can use these 27 bits to identify the piece of content in any manner they desire. The remaining 5 bits of the low 32 bits of the offer_id are reserved for system use. In one implementation, one of the 5 bits is used to indicate whether content is free or is to be paid for. If the content is free, then the verification of whether the requester can access the content (e.g., act 148 of Fig. 2) need not include a check as to whether the requester has paid an appropriate fee. Alternatively, all of the low 32 bits of the offer_id may be made available to the game title for the game developers to use as they desire (optionally including one bit to indicate whether content is free or is to be paid for).

Offers table 240 includes information describing each piece of content that referral source 104 manages. A separate entry is present in offers table 240 for each piece of content managed by source 104. Title_offers table 242 includes information describing which game title(s) are permitted to access particular pieces of content. A separate entry is present in title_offers table 242 for each piece of content managed by source 104 and each game title that is permitted to access that piece of content. Offer_locations table 244 includes information describing the different sources for particular pieces of content as well as the rankings of the different sources. A separate entry is present in offer_locations table 244 for each piece of content managed by source 104. Subscriptions table 246 includes information describing the different requesters and which pieces of content they are entitled to access (e.g., due to having paid for the right to access the pieces of content). For each piece of content managed by source 104, a separate entry is present in subscriptions table 246 for each requester that is entitled to access that piece.

Countries table 248 includes country codes, and offer_regions table 250 includes information mapping particular pieces of content to particular countries by their country code. A separate entry is present in countries table 248 for each country from which referral source 104 may allow content to be accessed. A separate entry is present in offer_regions table 250 for each piece of content managed by source 104 and, for each piece of content, each country in which the content is permitted to be accessed. Although discussed herein on a per-country basis, the regions may be any geographic boundaries (e.g., groups of multiple countries, portions of one or more countries, states, provinces, etc.). The information maintained in these various tables 240 - 250 is illustrated in the following tables.

| Offers Table 240 | |
|---|---|
| Field | Description |
| offer_id | The 64-bit identifier of a piece of content. |
| friendly_name | A textual name describing the content. |
| start_date | Beginning date (and optionally time) when the piece of content is available. |
| end_date | Date (and optionally time) when the piece of content is no longer available. |
| offer_type_id | A flag to indicate that the table entry corresponds to a piece of content rather than other information maintained in the table. |
| offer_frequency_id | Designates how frequently a user is charged for the content (e.g., once, monthly, weekly, etc.). |
| cancelable | A boolean value indicating if rights to the content can be revoked after purchasing. |
| ESRB id | A rating of the content's fitness for child consumption. |
| bitfilter | A set of bits a game title can use to designate certain types of content (e.g., weapons, tracks, etc.). |
| install_size | Amount of space that the piece of content will take up on the game console's hard drive when installed. The space may be represented in different units, such as bits, bytes, blocks (as defined by the game console), etc. |
| package_size | The size of the content to be downloaded, including the encrypted content, digest, and any other headers or information included in the package. |
| sym_key | The symmetric key that can be used to decrypt the piece of content (thus, each piece of content can have a separate key associated with it). |
| public_key | The public key that can be used to authenticate the piece of content to verify that it has not been tampered with. |
| policy_flags | Indicates whether the content is to be verified by the game console identifier, the user(s) identifier(s), both, or neither. |

| Title Offers Table 242 | |
|---|---|
| Field | Description |
| offer_id | The 64-bit identifier of a piece of content. |
| title_id | Identifier of a game title. |

| Offer Locations Table 244 | |
|---|---|
| Field | Description |
| offer_id | The 64-bit identifier of a piece of content. |
| location_rank | Rank of this location, indicating the preference to use this location relative to other locations (e.g., higher ranking locations being selected first). |
| XRL | Identifier of the source of the location. Includes, for example, a Uniform Resource Locator (URL) identifying a source device as well as an indication of where at that source device (e.g., a file directory, a database entry, etc.) the content is stored. |

| Subscriptions Table 246 | |
|---|---|
| Field | Description |
| offer_id | The 64-bit identifier of a piece of content. |
| subscription_id | Uniquely identifies the subscription (e.g., a billing entity), and may be globally unique, or locally unique to the referral source. |
| puid | Identifier of the user or machine that has the subscription. |
| start_date | Beginning date (and optionally time) of the subscription. |
| end_date | Expiration date (and optionally time) of the subscription. |
| subscription_status_id | Current status of the subscription (e.g., paid in full, canceled, violated terms of use agreement, etc.). |

| Countries Table 248 | |
|---|---|
| Field | Description |
| country_id | A country code. |
| vc_name | Friendly or common name for the country. |

| Offer Regions Table 250 | |
|---|---|
| Field Description | |
| offer_id | The 64-bit identifier of a piece of content. |
| country_id | A country code. |
| billing_offer_id | An identifier into another system used to charge a user for the content. |

Using tables 240 - 250, verification module 110 of Fig. 1 can verify whether a particular requester is permitted to access the requested content. Verification module 110 checks subscriptions table 246 to verify that the requester has a valid subscription for the requested content (alternatively, if the requested content is to be free, then subscriptions table 246 need not be checked). If there is no mapping in subscriptions table 246 of the requester identifier (e.g., puid) to the requested content (e.g., offer_id), then the requester is not permitted to retrieve the content. Additionally, if there is such a mapping in subscriptions table 246, then verification module 110 also checks to make sure that the requester's subscription is currently valid (e.g., the current date/time is not before the start date in the entry and not after the end date in the entry, and that the subscription status does not indicate that the requester's subscription does not permit access (e.g., that the user's subscription is not canceled, is not in violation of terms of use, etc.)).

As discussed above, the requester may be a machine (a game console) and/or a user(s). Verification module 110 may thus restrict access to content on a machine basis, on a user basis, or a combination of machine basis and user basis. How verification module 110 is to restrict access to content can be programmed in to verification module 110, or alternatively additional entries may be included in offers table 240 (or alternatively a new table(s) created) that identifies on a per-piece basis how verification module 110 is to restrict access. In situations where only a single identifier (e.g., the machine identifier or a single user identifier) need be in subscription table 246, then that single identifier is searched for. Alternatively, if there are multiple identifiers (e.g., multiple users of the game console, or the game console identifier and one or more user identifiers), then each of the identifiers needs to be in subscription table 246, or alternatively less than all (e.g., a majority of identifiers, at least one identifier, etc.). Thus, if four users are using a particular game console and request content, then verification module 110 may allow access to the content only if the user identifiers of all four users as well as the game console identifier are in subscription table 246, or alternatively may allow access to the content so long as the game console identifier is in subscription table 246, or alternatively may allow access to the content so long as at least one of the user identifiers is in subscription table 246, etc.

Verification module 110 also checks offer_regions table 250 to verify that the requester is associated with a country that is permitted to access the content. Different countries often have different laws regarding gaming content (e.g., certain words or symbols may be prohibited in certain countries, blood may be prohibited from being red in certain countries, and so forth). Thus, each country (or other geographic region) that is permitted to access the content (e.g., that the game developer wishes to make the content available to and believes the content does not violate the laws of) is mapped to that content in offer_regions table 250. If there is no mapping in offer_regions table 250 of the country that the requester is associated with to the requested content, then the requester is not permitted to retrieve the content.

The requester may be associated with a particular country or geographic region in a variety of manners. In one implementation, additional fields are included in subscriptions table 246, or alternatively an additional table is used, that identify the country the requester is associated with (e.g., the country the requester claims to be in (e.g., as agreed to as part of his or her terms of use agreement) and/or the country that the billing address for the content subscription is in).

Verification module 110 also checks title_offers table 242 to verify that the game title requesting the content (the game title running on the game console when the requester requests the content) is permitted to access the content. If there is no mapping of the identifier of the game title requesting the content (e.g., title_id) to the content identifier (e.g., offer_id), then the requester is not permitted to retrieve the content.

Alternatively, additional information may be maintained in database 114 to allow further restrictions to be imposed on which requesters are permitted to access content. For example, an offer_subscription_levels table may be included to restrict access to content based on various classes of requesters, such as different levels of subscription access (e.g., those paying more have access to more content), user-based teams (e.g., groups of users that are allowed access to particular content), versions of an application (e.g., only the newest version of a particular application is allowed to access particular content), and so forth.

Tables 240 - 250 can be populated with data in any of a variety of manners. Typically, each time a new piece of content is to be made available, the appropriate entries describing which requesters are permitted to access the content is added in to the appropriate tables 240 - 250. Additionally, changes may be made to the tables 240 - 250 relating to content that has been previously added to the tables. For example, new subscriptions may be purchased by different potential requesters, resulting in new (and/or modified) entries in subscriptions table 246 and altering who has access to the content.

By way of another example, situations can arise where the symmetric key used to encrypt a piece of content is (or is believed to be) compromised. In such situations, a new symmetric key can be readily generated, the piece of content encrypted using the new symmetric key, and this newly encrypted piece of content stored at the appropriate sources. The entry in offers table 240 for the piece of content is also updated to include the new symmetric key. Thus, any subsequent requesters will receive the new symmetric key and will be able to decrypt the newly encrypted piece of content, thereby circumventing the compromising of the previous key.

By way of yet another example, situations can arise where the sources of content pieces change. This may be due to a variety of different reasons, such as unreliability and/or failure of certain sources, the fees charged by the various sources to store the content, the geographic locations of the sources, etc. Any such changes can be readily accommodated by adding, deleting, and/or modifying the appropriate entries in offer_locations table 244.

Game console 102 can obtain the offer_id of particular content that it requests in any of a variety of different manners. In one implementation, game console 102 can query referral source 104 for a set of offer_id's that satisfy certain parameters (e.g., the offer_id's associated with a particular title_id (e.g., based on the corresponding entry in the title_offers table), the offer_id's that have the low 32 bits of the offer_id within a particular range (e.g., as defined by the game developer as meaning something in particular, such as new tracks, new weapons, new characters, etc.)). In another implementation, game console 102 may be given an offer_id from an online gaming source so that the game console can obtain the appropriate content to play a particular online game (e.g., a new version of a particular world that a role-playing game is being played in). In yet another implementation, game console 102 may be given an offer_id from another source, such as a removable disk inserted into game console 102 (e.g., a disk distributed with a magazine), manually entered by a user (e.g., obtained by the user from the Internet, a magazine article, etc.), and so forth.

In one implementation, a plurality of Application Programming Interfaces (APIs) are exposed to a game title running on a game console that allow the game title to retrieve and install pieces of content. A set of exemplary APIs are described below and include:

- XOnlineContentInstall
- XOnlineContentInstallGetProgress
- XOnlineTaskContinue
- XLoadContentSignatures
- XLocateSignatureByName
- XLocateSignatureByIndex
- XCalculateContentSignature

**XOnlineContentInstall**

Begins the download and installation of a specified piece of content. The function creates an asynchronous task to perform the download and installation.

```
HRESULT XOnlineContentInstall(
    XOFFERING_ID OfferingID,
    HANDLE hWorkEvent,
    XONLINETASK_HANDLE *phTask
);
```

**Parameters:**

*OfferingId*
[in] The unique identifier associated with the piece of content.

*h WorkEvent*
[in, optional] Handle to an event that will be signaled when work needs to be done on the installation task. This parameter can be NULL if no such event is required.

*phTask*
[out] Pointer to a variable of type **XONLINETASK_HANDLE** that receives a task handle representing this installation request. The handle can then be used in calls to XOnlineTaskContinue to perform work associated with this task.

**Return Values:**

If the function succeeds, the return value is S_OK.

**Remarks:**

XOnlineContentInstall performs all the steps necessary to download, install, and verify a piece of content. XOnlineContentInstall initiates the download and installation of the piece of content specified in *OfferingId.* This function creates an asynchronous task and returns a handle to that task in the *phTask* parameter. In order to perform work on (and eventually complete) this asynchronous task, XOnlineTaskContinue can be repeatedly called with the task handle until it returns a value other than XONLINETASK_S_RUNNING.
XOnlineTaskContinue will return XONLINETASK_S_SUCCESS to indicate that the task has completed successfully, or an error return value to indicate that the content installation has failed.

**XOnlineContentInstallGetProgress**

Retrieves the current progress of an offering download started with XOnlineContentInstall.

```
HRESULT XOnlineContentInstallGetProgress(
    XONLINETASK_HANDLE hTask,
    DWORD *pdwPercentDone,
    ULONGLONG *pqwNumerator,
    ULONGLONG *pqwDenominator
);
```

**Parameters:**

*hTask*
[in] The online task handle returned by the call to XOnlineContentInstall that began the content download and installation.

*pdwPercentDone*
[out, optional] Pointer to a variable that receives the completion percentage of the download, from 0 to 100. This parameter can be NULL if this information is not required.

*pqwNumerator*
[out, optional] Pointer to a variable that receives a ULONGLONG indicating the total number of bytes downloaded so far. This parameter can be NULL if this information is not required.

*pqwDenominator*
[out, optional] Pointer to a variable that receives a ULONGLONG indicating the total size, in bytes, of the offering to be downloaded. This parameter can be NULL if this information is not required.

**Return Values:**

If the function succeeds, the return value is S_OK.

**Remarks:**

The function performs no actual work on the download and installation, it simply indicates the progress of that download.

**XOnlineTaskContinue**

The XOnlineTaskContinue function performs a single timeslice of work on a pending asynchronous task.

```
HRESULT XOnlineTaskContinue(
    XONLINETASK_HANDLE hTask
);
```

**Parameters:**

*hTask*
[in] The task handle of the task for which work is to be done. This handle must have been returned by a previous call to a function that creates asynchronous tasks.

**Return Values:**

The function returns either a general code indicating the status of the task, or a task-specific result code when the task has completed or when an error has occurred. The general result codes are:

| Value | Description |
|---|---|
| XONLINETASK_S_RESULTS_AVAIL | The task is still running, but results are available. |
| XONLINETASK_S_RUNNING | The task is still running. |
| XONLINETASK_S_SUCCESS | The task has completed successfully. |

For tasks that have completed or that have encountered an error there may be task-specific return codes. See remarks for more information.

**Remarks:**

Several online functions create asynchronous tasks to perform work rather than blocking and performing the work synchronously. These functions return a task handle that is then passed to XOnlineTaskContinue when the title has some spare cycles and wishes to perform some online work (for example, when the title is waiting for the next flip or while the title is stalled waiting for the graphics push-buffer to clear.) Additionally, by making multiple calls to XOnlineTaskContinue, the title can spread a burst of network activity across several video frames to help stabilize the frame rate. Multiple pending asynchronous tasks can also be processed by a single section of code that calls XOnlineTaskContinue for each task in turn.

When the work required for the task has been completed, XOnlineTaskContinue returns XONLINETASK_S_SUCCESS, indicating that the task is finished and no further calls to XOnlineTaskContinue should be made for that task. Depending on the specific online task involved, additional task-specific functions may be called at that point to retrieve the results of the task.

For some tasks, XOnlineTaskContinue will return XONLINETASK_S_RESULTS_AVAIL to indicate that the task is not complete, but that partial results are available. At this point, a task-specific function is called to retrieve the results. The title then continues processing the task with further calls to XOnlineTaskContinue.

If the task is still running, XOnlineTaskContinue returns XONLINETASK_S_RUNNING. In this case, as time permits, the title should continue calling XOnlineTaskContinue to continue processing the task.

Some tasks provide other return codes to indicate success or progress states.

If an error occurs while a task is being processed, the error is returned by XOnlineTaskContinue when XOnlineTaskContinue is called by the title to work on the task. Specific error codes can vary from task to task.

By design, some tasks never run to completion and are instead called regularly to perform updates or other processing. Typically, XOnlineTaskContinue should be called once per frame for those tasks, and will continue to return XONLINETASK_S_RUNNING.

The exact amount of time and work performed for each call to XOnlineTaskContinue varies by task. The time allotment is designed to be sufficient to progress on the task without causing undue delays.

Periodically calling XOnlineTaskContinue is often referred to as *pumping* a task, and the asynchronous task architecture as the *online task pump.*

**XLoadContentSignatures**

Loads signatures for the specified content and returns a handle to the signature data.

```
HANDLE XLoadContentSignatures(
    DWORD TitleID,
    LPCSTR DirectoryName
);
```

**Parameters:**

TitleID
    [in] Specifies the title identifier of the title that installed the content. If TitleID is zero, the title identifier of the calling title is used.

DirectoryName
    [in] Specifies the content's installation directory.

**Return Values:**

If the function succeeds, the return value is the handle to the signature data for the specified content. If the function fails, the return value is NULL.

**Remarks:**

XLoadContentSignatures loads the content signatures (e.g., the digests discussed above) belonging to the specified content, verifies the integrity of the signature data, and returns a handle to the signature data. The handle can be used in subsequent calls to XLocateSignatureByIndex and XLocateSignatureByName to retrieve content signatures, then those signatures compared against signatures computed over the content data.
XCalculateContentSignatures is used to compute a signature over the content data to compare with the returned signature(s). Alternatively, if the signatures were . created in a title-specific manner, then the title uses its own algorithms to compute a signature over the content to compare with the returned signatures.

**XLocateSignatureByName**

Retrieves a content signature, from the specified signature data, for a file or block of data within a file.

```
BOOL XLocateSignatureByName(
    HANDLE SignatureHandle,
    LPCSTR FileName,
    DWORD FileOffset,
    DWORD DataSize,
    LPBYTE *SignatureData,
    DWORD *SignatureSize
);
```

**Parameters:**

*SignatureHandle*
    [in] Handle to signature data opened with XLoadContentSignatures.

*FileName*
    [in] Pointer to a null-terminated string that specifies the file that contains the data block for which the signature is to be retrieved.

*FileOffset*
    [in] Specifies the offset into the file, in bytes, of the data block.

*DataSize*
    [in] Specifies the size, in bytes, of the data block.

*SignatureData*
    [out] Pointer to an LPBYTE variable that receives the address of the specified signature.

*SignatureSize*
    [out] Pointer to a DWORD variable that receives the size, in bytes, of the signature pointed to by SignatureData.

**Return Values:**

If the function succeeds, the return value is TRUE. If the function fails, the return value is FALSE.

**Remarks:**

XLocateSignatureByName retrieves a signature for a specified block of data. A given content file may have a single signature (representing the entire file), or the file may be broken into smaller data blocks with signatures calculated separately for each data block. Multiple signatures could facilitate, for example, loading smaller pieces of content from a large resource file and enable computing and comparing a signature over only the portion of data loaded. **[0134]** To retrieve the signature for an entire file, zero is specified for *FileOffset* and *DataSize.* To retrieve the signature for a specific block of data within a file, the beginning offset and size of the data block are specified. A signature that matches the data range specified will be searched for in the signature data and returned if found. Note that, in either case, the signature for the data block was specified and computed when the signature data was initially created.

**XLocateSignatureByIndex**

Retrieves a content signature, by index, from the specified signature data.

```
BOOL XLocateSignatureByIndex(
    HANDLE SignatureHandle,
    DWORD SignatureIndex,
    LPBYTE *SignatureData,
    DWORD *SignatureSize
);
```

**Parameters**

*SignatureHandle*
    [in] Handle to signature data opened with XLoadContentSignatures.

*SignatureIndex*
    [in] Specifies the index of the signature to retrieve.

*SignatureData*
    [out] Pointer to an LPBYTE variable that receives the address of the specified signature.

*SignatureSize*
    [out] Pointer to a DWORD variable that receives the size, in bytes, of the signature pointed to by SignatureData.

**Return Values:**

If the function succeeds, the return value is TRUE. If the function fails, the return value is FALSE.

**Remarks:**

XLocateSignatureByIndex retrieves the signature at the specified index from the specified open signature data.

**XCalculateContentSignature**

Calculates a signature over the specified data and matches received content signatures.

```
BOOL XCalculateContentSignature(
    LPBYTE Data,
    DWORD DataSize,
    LPBYTE Signature,
    DWORD *SignatureSize
);
```

**Parameters:**

*Data* [in] Pointer to a buffer that contains the data over which the signature is calculated.
*DataSize*
    [in] Specifies the size, in bytes, of the Data buffer.
*Signature*
    [out] Pointer to a buffer that receives the calculated signature.
*SignatureSize*
    [in, out] Pointer to a DWORD variable that specifies the size, in bytes, of the buffer pointed to by Signature. On return, SignatureSize receives the actual number of bytes written to the Signature buffer.

**Return Values:**

If the function succeeds, the return value is TRUE. If the function fails, the return value is FALSE.

**Remarks:**

XCalculateContentSignature calculates a signature (e.g., digest as discussed above) over the specified piece of content, using the same algorithm as used to generate the signature as stored with the piece of content. To verify installed content data, a signature can be calculated over the data with XCalculateContentSignature, then compared with the signature for the same data as returned by the XLocateSignatureName or XLocateSignatureByIndex functions.

Alternatively, rather than calling XCalculateContentSignature, the game title can use whatever title-specific algorithm it initially used to create the content signatures.

To determine the buffer size needed to hold the signature (without actually performing the signature calculation), zero is specified for *SignatureSize.* The required size will be returned in *SignatureSize.*

Fig. 5 is a block diagram of an exemplary online gaming environment 300. Multiple game consoles 302(1), 302(2), ..., 302(*n*) are coupled to a security gateway 304 via a network 306. Network 306 represents any one or more of a variety of conventional data communications networks. Network 306 will typically include packet switched networks, but may also include circuit switched networks. Network 306 can include wire and/or wireless portions. In one exemplary implementation, network 306 includes the Internet and may optionally include one or more local area networks (LANs) and/or wide area networks (WANs). At least a part of network 306 is a public network, which refers to a network that is publicly-accessible. Virtually anyone can access the public network.

In some situations, network 306 includes a LAN (e.g., a home network), with a routing device situated between game console 302 and security gateway 304. This routing device may perform network address translation (NAT), allowing the multiple devices on the LAN to share the same IP address on the Internet, and also operating as a firewall to protect the device(s) on the LAN from access by malicious or mischievous users via the Internet.

Security gateway 304 operates as a gateway between public network 306 and a private network 308. Private network 308 can be any of a variety of conventional networks, such as a local area network. Private network 308, as well as other devices discussed in more detail below, is within a data center 310 that operates as a secure zone. Data center 310 is made up of trusted devices communicating via trusted communications. Thus, encryption and authentication within secure zone 310 is not necessary. The private nature of network 308 refers to the restricted accessibility of network 308 - access to network 308 is restricted to only certain individuals (e.g., restricted by the owner or operator of data center 310).

Security gateway 304 is a cluster of one or more security gateway computing devices. These security gateway computing devices collectively implement security gateway 304. Security gateway 304 may optionally include one or more conventional load balancing devices that operate to direct requests to be handled by the security gateway computing devices to appropriate ones of those computing devices. This directing or load balancing is performed in a manner that attempts to balance the load on the various security gateway computing devices approximately equally (or alternatively in accordance with some other criteria).

Also within data center 310 are: one or more monitoring servers 312; one or more presence and notification front doors 314, one or more presence servers 316, and one or more notification servers 318 (collectively implementing a presence and notification service); one or more match front doors 320 and one or more match servers 322 (collectively implementing a match service); one or more statistics front doors 324 and one or more statistics servers 326 (collectively implementing a statistics service); and one or more referral front doors 330 and servers 104. The servers 316, 318, 322, 326, and 104 provide services to game consoles 302, and thus can be referred to as service devices. Other service devices may also be included in addition to, and/or in place of, one or more of the servers 316, 318, 322, 326, and 104. Additionally, although only one data center is shown in Fig. 5, alternatively multiple data centers may exist with which game consoles 302 can communicate. These data centers may operate independently or alternatively may operate collectively (e.g., to make one large data center available to game consoles 302).

Game consoles 302 are situated remotely from data center 310, and access data center 310 via network 306. A game console 302 desiring to communicate with one or more devices in the data center establishes a secure communication channel between the console 302 and security gateway 304. Game console 302 and security gateway 304 encrypt and authenticate data packets being passed back and forth, thereby allowing the data packets to be securely transmitted between them without being understood by any other device that may capture or copy the data packets without breaking the encryption. Each data packet communicated from game console 302 to security gateway 304, or from security gateway 304 to game console 302 can have data embedded therein. This embedded data is referred to as the content of the packet or the data content of the packet. Additional information may also be inherently included in the packet based on the packet type.

As discussed above, the secure communication channel between a console 302 and security gateway 304 is based on a security ticket. Console 302 authenticates itself and the current user(s) of console 302 to a key distribution center 328 and obtains, from key distribution center 328, a security ticket. Console 302 then uses this security ticket to establish the secure communication channel with security gateway 304. In establishing the secure communication channel with security gateway 304, the game console 302 and security gateway 304 authenticate themselves to one another and establish a session security key that is known only to that particular game console 302 and the security gateway 304. This session security key is used to encrypt data transferred between the game console 302 and the security gateway cluster 304, so no other devices (including other game consoles 302) can read the data. The session security key is also used to authenticate a data packet as being from the security gateway 304 or game console 302 that the data packet alleges to be from. Thus, using such session security keys, secure communication channels can be established between the security gateway 304 and the various game consoles 302.

Once the secure communication channel is established between a game console 302 and the security gateway 304, encrypted data packets can be securely transmitted between the two. When the game console 302 desires to send data to a particular service device in data center 310, the game console 302 encrypts the data and sends it to security gateway 304 requesting that it be forwarded to the particular service device(s) targeted by the data packet. Security gateway 304 receives the data packet and, after authenticating and decrypting the data packet, encapsulates the data content of the packet into another message to be sent to the appropriate service via private network 308. Security gateway 304 determines the appropriate service for the message based on the requested service(s) targeted by the data packet.

Although discussed herein as primarily communicating encrypted data packets between security gateway 304 and a game console 302, alternatively some data packets may be partially encrypted (some portions of the data packets are encrypted while other portions are not encrypted). Which portions of the data packets are encrypted and which are not can vary based on the desires of the designers of data center 310 and/or game consoles 302. For example, the designers may choose to allow voice data to be communicated among consoles 302 so that users of the consoles 302 can talk to one another - the designers may further choose to allow the voice data to be unencrypted while any other data in the packets is encrypted. Additionally, in another alternative, some data packets may have no portions that are encrypted (that is, the entire data packet is unencrypted). It should be noted that, even if a data packet is unencrypted or only partially encrypted, all of the data packet is still authenticated.

Similarly, when a service device in data center 310 desires to communicate data to a game console 302, the data center sends a message to security gateway 304, via private network 308, including the data content to be sent to the game console 302 as well as an indication of the particular game console 302 to which the data content is to be sent. Security gateway 304 embeds the data content into a data packet, and then encrypts the data packet so it can only be decrypted by the particular game console 302 and also authenticates the data packet as being from the security gateway 304.

Each security gateway device in security gateway 304 is responsible for the secure communication channel with typically one or more game consoles 302, and thus each security gateway device can be viewed as being responsible for managing or handling one or more game consoles. The various security gateway devices may be in communication with each other and communicate messages to one another. For example, a security gateway device that needs to send a data packet to a game console that it is not responsible for managing may send a message to all the other security gateway devices with the data to be sent to that game console. This message is received by the security gateway device that is responsible for managing that game console and sends the appropriate data to that game console. Alternatively, the security gateway devices may be aware of which game consoles are being handled by which security gateway devices - this may be explicit, such as each security gateway device maintaining a table of game consoles handled by the other security gateway devices, or alternatively implicit, such as determining which security gateway device is responsible for a particular game console based on an identifier of the game console.

Monitoring server(s) 312 operate to inform devices in data center 310 of an unavailable game console 302 or an unavailable security gateway device of security gateway 304. Game consoles 302 can become unavailable for a variety of different reasons, such as a hardware or software failure, the console being powered-down without logging out of data center 310, the network connection cable to console 302 being disconnected from console 302, other network problems (e.g., the LAN that the console 302 is on malfunctioning), etc. Similarly, a security gateway device of security gateway 304 can become unavailable for a variety of different reasons, such as hardware or software failure, the device being powered-down, the network connection cable to the device being disconnected from the device, other network problems, etc.

Each of the security gateway devices in security gateway 304 is monitored by one or more monitoring servers 312, which detect when one of the security gateway devices becomes unavailable. In the event a security gateway device becomes unavailable, monitoring server 312 sends a message to each of the other devices in data center 310 (servers, front doors, etc.) that the security gateway device is no longer available. Each of the other devices can operate based on this information as it sees fit (e.g., it may assume that particular game consoles being managed by the security gateway device are no longer in communication with data center 310 and perform various clean-up operations accordingly). Alternatively, only certain devices may receive such a message from the monitoring server 312 (e.g., only those devices that are concerned with whether security gateway devices are available).

Security gateway 304 monitors the individual game consoles 302 and detects when one of the game consoles 302 becomes unavailable. When security gateway 304 detects that a game console is no longer available, security gateway 304 sends a message to monitoring server 312 of the unavailable game console. In response, monitoring server 312 sends a message to each of the other devices in data center 310 (or alternatively only selected devices) that the game console is no longer available. Each of the other devices can then operate based on this information as it sees fit.

Presence server(s) 316 hold and process data concerning the status or presence of a given user logged in to data center 310 for online gaming. Notification server(s) 318 maintains multiple queues of outgoing messages destined for a player logged in to data center 310. Presence and notification front door 314 is one or more server devices that operate as an intermediary between security gateway 304 and servers 316 and 318. One or more load balancing devices (not shown) may be included in presence and notification front door 314 to balance the load among the multiple server devices operating as front door 314. Security gateway 304 communicates messages for servers 316 and 318 to the front door 314, and the front door 314 identifies which particular server 316 or particular server 318 the message is to be communicated to. By using front door 314, the actual implementation of servers 316 and 318, such as which servers are responsible for managing data regarding which users, is abstracted from security gateway 304. Security gateway 304 can simply forward messages that target the presence and notification service to presence and notification front door 314 and rely on front door 314 to route the messages to the appropriate one of server(s) 316 and server(s) 318.

Match server(s) 322 hold and process data concerning the matching of online players to one another. An online user is able to advertise a game available for play along with various characteristics of the game (e.g., the location where a football game will be played, whether a game is to be played during the day or at night, the user's skill level, etc.). These various characteristics can then be used as a basis to match up different online users to play games together. Match front door 320 includes one or more server devices (and optionally a load balancing device(s)) and operates to abstract match server(s) 322 from security gateway 304 in a manner analogous to front door 314 abstracting server(s) 316 and server(s) 318.

Statistics server(s) 326 hold and process data concerning various statistics for online games. The specific statistics used can vary based on the game designer's desires (e.g., the top ten scores or times, a world ranking for all online players of the game, a list of users who have found the most items or spent the most time playing, etc.). Statistics front door 326 includes one or more server devices (and optionally a load balancing device(s)) and operates to abstract statistics server(s) 326 from security gateway 304 in a manner analogous to front door 314 abstracting server(s) 316 and server(s) 318.

Referral front door 330 is one or more server devices that operate as an intermediary between security gateway 304 and referral source 104. One or more load balancing devices (not shown) may be included in referral front door 330 to balance the load among the multiple server devices operating as front door 330. Referral source 104 maintains various information regarding pieces of content available for game titles, and manages access to that content by game consoles (e.g., identifying a content source 106 from which the content can be retrieved) as discussed above. Game console identifiers, user identifiers, and game titles are authenticated by security gateway 304 as discussed above. Thus, when a referral source receives a content request that identifies the game console, the game console users, and/or the game title, the referral source can query security gateway 304 as to whether the game console, user identifiers, and/or game title indicated in the request are indeed the game console, user identifiers, and/or game title that have been authenticated by security gateway 304.

Thus, it can be seen that security gateway 304 operates to shield devices in the secure zone of data center 310 from the untrusted, public network 306. Communications within the secure zone of data center 310 need not be encrypted, as all devices within data center 310 are trusted. However, any information to be communicated from a device within data center 310 to a game console 302 passes through security gateway cluster 304, where it is encrypted in such a manner that it can be decrypted by only the game console 302 targeted by the information.

From the discussion above, it can be seen that content source locations and cryptographic keys for content packages can be distributed through secured channels so that the content sources themselves do not have to be secured. For example, a game console converses with the referral sources through the secure communication channel described above to obtain the content location and cryptographic keys. Subsequently, the game console initiates an unsecured connection (e.g., over the Internet) to the content source to download the requested content. Since the content packages are encrypted and authenticated, any content packages that were not authorized or have been tampered with will be detected and rejected by the game console.

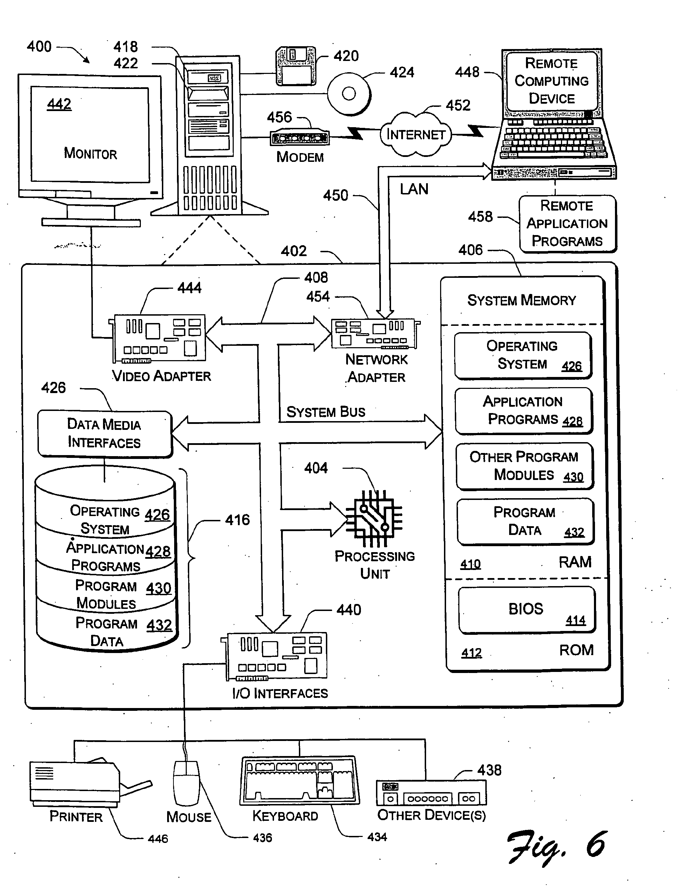

Fig. 6 illustrates a general computer environment 400, which can be used to implement the techniques described herein. The computer environment 400 is only one example of a computing environment and is not intended to suggest any limitation as to the scope of use or functionality of the computer and network architectures. Neither should the computer environment 400 be interpreted as having any dependency or requirement relating to any one or combination of components illustrated in the exemplary computer environment 400.

Computer environment 400 includes a general-purpose computing device in the form of a computer 402. Computer 402 can be, for example, a referral source 104 (or a server at a referral source 104) or content source of 106 of Fig. 1, or a server 312, 316, 318, 322, and/or 326 of Fig. 5, or a front door 314, 320, 324, and/or 330 of Fig. 5. The components of computer 402 can include, but are not limited to, one or more processors or processing units 404 (optionally including a cryptographic processor or co-processor), a system memory 406, and a system bus 408 that couples various system components including the processor 404 to the system memory 406.

The system bus 408 represents one or more of any of several types of bus structures, including a memory bus or memory controller, a peripheral bus, an accelerated graphics port, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

Computer 402 typically includes a variety of computer readable media. Such media can be any available media that is accessible by computer 402 and includes both volatile and non-volatile media, removable and non-removable media.

The system memory 406 includes computer readable media in the form of volatile memory, such as random access memory (RAM) 410, and/or non-volatile memory, such as read only memory (ROM) 412. A basic input/output system (BIOS) 414, containing the basic routines that help to transfer information between elements within computer 402, such as during start-up, is stored in ROM 412. RAM 410 typically contains data and/or program modules that are immediately accessible to and/or presently operated on by the processing unit 404.

Computer 402 may also include other removable/non-removable, volatile/non-volatile computer storage media. By way of example, Fig. 6 illustrates a hard disk drive 416 for reading from and writing to a non-removable, non-volatile magnetic media (not shown), a magnetic disk drive 418 for reading from and writing to a removable, non-volatile magnetic disk 420 (e.g., a "floppy disk"), and an optical disk drive 422 for reading from and/or writing to a removable, non-volatile optical disk 424 such as a CD-ROM, DVD-ROM, or other optical media. The hard disk drive 416, magnetic disk drive 418, and optical disk drive 422 are each connected to the system bus 408 by one or more data media interfaces 426. Alternatively, the hard disk drive 416, magnetic disk drive 418, and optical disk drive 422 can be connected to the system bus 408 by one or more interfaces (not shown).

The disk drives and their associated computer-readable media provide non-volatile storage of computer readable instructions, data structures, program modules, and other data for computer 402. Although the example illustrates a hard disk 416, a removable magnetic disk 420, and a removable optical disk 424, it is to be appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the exemplary computing system and environment.

Any number of program modules can be stored on the hard disk 416, magnetic disk 420, optical disk 424, ROM 412, and/or RAM 410, including by way of example, an operating system 426, one or more application programs 428, other program modules 430, and program data 432. Each of such operating system 426, one or more application programs 428, other program modules 430, and program data 432 (or some combination thereof) may implement all or part of the resident components that support the distributed file system.

A user can enter commands and information into computer 402 via input devices such as a keyboard 434 and a pointing device 436 (e.g., a "mouse"). Other input devices 438 (not shown specifically) may include a microphone, joystick, game pad, satellite dish, serial port, scanner, and/or the like. These and other input devices are connected to the processing unit 404 via input/output interfaces 440 that are coupled to the system bus 408, but may be connected by other interface and bus structures, such as a parallel port, game port, or a universal serial bus (USB).

A monitor 442 or other type of display device can also be connected to the system bus 408 via an interface, such as a video adapter 444. In addition to the monitor 442, other output peripheral devices can include components such as speakers (not shown) and a printer 446 which can be connected to computer 402 via the input/output interfaces 440.

Computer 402 can operate in a networked environment using logical connections to one or more remote computers, such as a remote computing device 448. By way of example, the remote computing device 448 can be a personal computer, portable computer, a server, a router, a network computer, a peer device or other common network node, game console, and the like. The remote computing device 448 is illustrated as a portable computer that can include many or all of the elements and features described herein relative to computer 402.

Logical connections between computer 402 and the remote computer 448 are depicted as a local area network (LAN) 450 and a general wide area network (WAN) 452. Such networking environments are commonplace in offices, enterprise-wide computer networks, intranets, and the Internet.

When implemented in a LAN networking environment, the computer 402 is connected to a local network 450 via a network interface or adapter 454. When implemented in a WAN networking environment, the computer 402 typically includes a modem 456 or other means for establishing communications over the wide network 452. The modem 456, which can be internal or external to computer 402, can be connected to the system bus 408 via the input/output interfaces 440 or other appropriate mechanisms. It is to be appreciated that the illustrated network connections are exemplary and that other means of establishing communication link(s) between the computers 402 and 448 can be employed.

In a networked environment, such as that illustrated with computing environment 400, program modules depicted relative to the computer 402, or portions thereof, may be stored in a remote memory storage device. By way of example, remote application programs 458 reside on a memory device of remote computer 448. For purposes of illustration, application programs and other executable program components such as the operating system are illustrated herein as discrete blocks, although it is recognized that such programs and components reside at various times in different storage components of the computing device 402, and are executed by the data processor(s) of the computer.

Various modules and techniques may be described herein in the general context of computer-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

An implementation of these modules and techniques may be stored on or transmitted across some form of computer readable media. Computer readable media can be any available media that can be accessed by a computer. By way of example, and not limitation, computer readable media may comprise "computer storage media" and "communications media."

"Computer storage media" includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

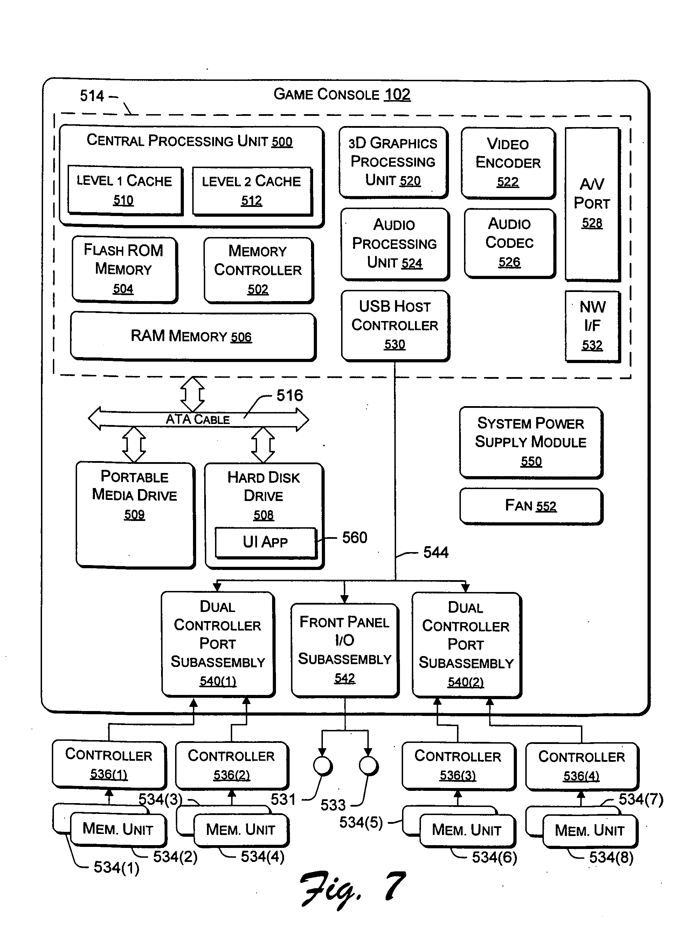

Fig. 7 shows functional components of an exemplary game console 102 in more detail. Game console 102 has a central processing unit (CPU) 500 and a memory controller 502 that facilitates processor access to various types of memory, including a flash ROM (Read Only Memory) 504, a RAM (Random Access Memory) 506, a hard disk drive 508, and a portable media drive 509. CPU 500 is equipped with a level 1 cache 510 and a level 2 cache 512 to temporarily store data and hence reduce the number of memory access cycles, thereby improving processing speed and throughput.

CPU 500, memory controller 502, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

As one suitable implementation, CPU 500, memory controller 502, ROM 504, and RAM 506 are integrated onto a common module 514. In this implementation, ROM 504 is configured as a flash ROM that is connected to the memory controller 502 via a PCI (Peripheral Component Interconnect) bus and a ROM bus (neither of which are shown). RAM 506 is configured as multiple DDR SDRAM (Double Data Rate Synchronous Dynamic RAM) that are independently controlled by the memory controller 502 via separate buses (not shown). The hard disk drive 508 and portable media drive 509 are connected to the memory controller via the PCI bus and an ATA (AT Attachment) bus 516.

A 3D graphics processing unit 520 and a video encoder 522 form a video processing pipeline for high speed and high resolution graphics processing. Data is carried from the graphics processing unit 520 to the video encoder 522 via a digital video bus (not shown). An audio processing unit 224 and an audio codec (coder/decoder) 526 form a corresponding audio processing pipeline with high fidelity and stereo processing. Audio data is carried between the audio processing unit 524 and the audio codec 526 via a communication link (not shown). The video and audio processing pipelines output data to an A/V (audio/video) port 528 for transmission to the television or other display. In the illustrated implementation, the video and audio processing components 520-528 are mounted on the module 514.

Also implemented on the module 514 are a USB host controller 530 and a network interface 532. The USB host controller 530 is coupled to the CPU 500 and the memory controller 502 via a bus (e.g., PCI bus) and serves as host for the peripheral controllers 536(1)-536(4). The network interface 232 provides access to a network (e.g., Internet, home network, etc.) and may be any of a variety of various wire or wireless interface components including an Ethernet card, a modem, a Bluetooth module, a cable modem, and the like.

The game console 102 has two dual controller support subassemblies 540(1) and 540(2), with each subassembly supporting two game controllers 536(1)-536(4). A front panel I/O subassembly 542 supports the functionality of a power button 531 and a media drive eject button 533, as well as any LEDs (light emitting diodes) or other indicators exposed on the outer surface of the game console. The subassemblies 540(1), 540(2), and 542 are coupled to the module 514 via one or more cable assemblies 544.

Eight memory units 534(1)-534(8) are illustrated as being connectable to the four controllers 536(1)-536(4), i.e., two memory units for each controller. Each memory unit 534 offers additional storage on which games, game parameters, and other data may be stored. When inserted into a controller, the memory unit 534 can be accessed by the memory controller 502.

A system power supply module 550 provides power to the components of the game console 102. A fan 552 cools the circuitry within the game console 102.

A console user interface (UI) application 560 is stored on the hard disk drive 508. When the game console is powered on, various portions of the console application 560 are loaded into RAM 506 and/or caches 510, 512 and executed on the CPU 500. Console application 560 presents a graphical user interface that provides a consistent user experience when navigating to different media types available on the game console.

Game console 102 implements a cryptography engine to perform common cryptographic functions, such as encryption, decryption, authentication, digital signing, hashing, and the like. The cryptography engine may be implemented as part of the CPU 500, or in software stored on the hard disk drive 508 that executes on the CPU, so that the CPU is configured to perform the cryptographic functions. Alternatively, a cryptographic processor or co-processor designed to perform the cryptographic functions may be included in game console 102.

Game console 102 may be operated as a standalone system by simply connecting the system to a television or other display. In this standalone mode, game console 102 allows one or more players to play games, watch movies, or listen to music. However, with the integration of broadband connectivity made available through the network interface 532, game console 102 may further be operated as a participant in online gaming, as discussed above.

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

**Claims**

1. A method comprising:

    receiving, from a device, a content referral request; and
    sending to the device, in response to the content referral request, both an identifier of a source of the content and one or more keys that allow the device to decrypt the content.

2. A method as recited in claim 1, further comprising:

    verifying, prior to sending the identifier and the one or more keys, that a requester of the content referral request is permitted to access the content.

3. A method as recited in claim 2, wherein the verifying further comprises verifying that an application running on the device is permitted to access the content.

4. A method as recited in claim 2, wherein the requester comprises the device and wherein the verifying further comprises verifying that the device is permitted to access the content.

5. A method as recited in claim 2, wherein the requester comprises a user of the device and wherein the verifying further comprises verifying that the user is permitted to access the content.

6. A method as recited in claim 2, wherein the verifying further comprises verifying that the requester is associated with a country that is permitted to access the content.

7. A method as recited in claim 2, wherein the verifying further comprises verifying that the requester is associated with a geographic region that is permitted to access the content.

8. A method as recited in claim 1, further comprising:

    verifying a requester of the content referral request;
    sending the identifier and the one or more keys only if the requester is verified; and

    wherein the verifying comprises,

    verifying that the device is permitted to access the content,
    verifying that an application running on the device is permitted to access the content, and
    verifying that the device is associated with a geographic region that is permitted to access the content.

9. A method as recited in claim 1, further comprising:

    verifying a requester of the content referral request;
    sending the identifier and the one or more keys only if the requester is verified; and

    wherein the verifying comprises,

    verifying that a user of the device is permitted to access the content,
    verifying that an application running on the device is permitted to access the content, and
    verifying that the user is associated with a country that is permitted to access the content.

10. A method as recited in claim 1, further comprising:

    identifying, prior to sending the identifier and the one or more keys, a plurality of sources of the content and selecting one of the plurality of sources.

11. A method as recited in claim 10, wherein each of the plurality of sources has an associated ranking and wherein the selecting comprises selecting the one of the plurality of sources having the highest ranking.

**12.** A method as recited in claim 10, wherein the selecting is based at least in part on a current load of each of the plurality of sources.

**13.** A method as recited in claim 10, wherein the selecting is based at least in part on a geographic location of the device.

**14.** A method as recited in claim 10, wherein the selecting is based at least in part on a subscription level of the device.

**15.** A method as recited in claim 10, wherein the selecting is based at least in part on a subscription level of a user of the device.

**16.** A method as recited in claim 10, wherein the selecting is based at least in part on the current availability of each of the plurality of sources.

**17.** A method as recited in claim 1, further comprising:

identifying, prior to sending the identifier and the one or more keys, a plurality of sources of the content; and

wherein the sending comprises sending identifiers of the plurality of sources to the device.

**18.** A method as recited in claim 1, further comprising:

authenticating a requester of the content referral request, and sending the identifier and the one or more keys only if the requester is authenticated.

**19.** A method as recited in claim 18, wherein the requester comprises the device.

**20.** A method as recited in claim 18, wherein the requester comprises a user of the device.

**21.** A method as recited in claim 18, wherein the requester comprises a plurality of users of the device.

**22.** A method as recited in claim 1, wherein the one or more keys comprise a symmetric key and a public key of a public/private key pair.

**23.** A method as recited in claim 22, wherein the symmetric key allows the device to decrypt the content and wherein the public key allows the device to authenticate the content.

**24.** A method as recited in claim 1, wherein the source comprises a remote server device.

**25.** A method as recited in claim 1, wherein the source comprises a local storage device.

**26.** A method as recited in claim 1, wherein the content comprises an entire game.

**27.** A method as recited in claim 1, wherein the content comprises a segment of a game.

**28.** A method as recited in claim 1, wherein the content comprises new features for a game title.

**29.** A method as recited in claim 1, wherein the content comprises one or more new modules to correct problems in previously shipped modules of a game title.

**30.** A method as recited in claim 1, wherein the device comprises a game console.

**31.** A method comprising:

maintaining a record of where a plurality of content packages are stored;
maintaining a record of a plurality of keys, wherein each of the plurality of keys can be used to decrypt at least one of the plurality of content packages; and
restricting, for a particular one of the plurality of content packages, which of a plurality of requesting devices can receive an indication of where the content package is stored as well as one of the plurality of keys, wherein the one of the plurality of keys can be used to decrypt the content package.

**32.** A method as recited in claim 31, wherein the restricting comprises restricting which of the plurality of requesting devices can receive the indication based at least in part on game titles running on the devices.

**33.** A method as recited in claim 31, wherein the restricting comprises restricting which of the plurality of requesting devices can receive the indication based at least in part on identifiers of the devices.

**34.** A method as recited in claim 31, wherein the restricting comprises restricting which of the plurality of requesting devices can receive the indication based at least in part on users of the devices.

**35.** A method as recited in claim 31, wherein the restricting comprises restricting which of the plurality of requesting devices can receive the indication based at least in part on geographic regions associated with the devices.

**36.** A method as recited in claim 31, wherein each of the plurality of content packages can be stored at a plurality of sources, and further comprising:

selecting, for a particular device, which of the plurality of sources the device is to receive the indication of.

**37.** One or more computer readable media having stored thereon a plurality of instructions that, when executed by one or more processors, causes the one or more processors to:

maintain a record of a plurality of locations where content is stored;
maintain a record of a key that can be used to decrypt the content;
receive, from a device, a request for a referral to the content; and
send, to the device, both the key that can be used to decrypt the content and an identifier of one of the plurality of locations where the content is stored.

**38.** One or more computer readable media as recited in claim 37, wherein the instructions further cause the one or more processors to send both the key and the identifier to the device only if an application running on the device is permitted to access the content.

**39.** One or more computer readable media as recited in claim 37, wherein the instructions further cause the one or more processors to send both the key and the identifier to the device only if the device is permitted to access the content.

**40.** One or more computer readable media as recited in claim 37, wherein the instructions further cause the one or more processors to send both the key and the identifier to the device only if a user of the device is permitted to access the content.

**41.** One or more computer readable media as recited in claim 37, wherein the instructions further cause the one or more processors to send both the key and the identifier to the device only if the requester is associated with a geographic region that is permitted to access the content.

**42.** One or more computer readable media as recited in claim 37, wherein the instructions further cause the one or more processors to identify one of the plurality of locations based at least in part on a ranking associated with each of the plurality of locations.

**43.** One or more computer readable media as recited in claim 37, wherein the instructions further cause the one or more processors to identify one of the plurality of locations based at least in part on a current load of each of the plurality of locations.

**44.** One or more computer readable media as recited in claim 37, wherein the instructions further cause the one or more processors to identify one of the plurality of locations based at least in part on a geographic location of the device.

**45.** One or more computer readable media as recited in claim 37, wherein the instructions further cause the one or more processors to identify one of the plurality of locations based at least in part on a subscription level of the device.

**46.** One or more computer readable media as recited in claim 37, wherein the instructions further cause the one or more processors to identify one of the plurality of locations based at least in part on a subscription level of a user of the device.

**47.** One or more computer readable media as recited in claim 37, wherein the instructions further cause the one or more processors to identify one of the plurality of locations based at least in part on the current availability of each of the plurality of sources.

**48.** One or more computer readable media having stored thereon a plurality of instructions that, when executed by one or more processors of a device, causes the one or more processors to:

send, to a remote device, a request for a referral to a source of a piece of content;
receive, from the remote device, both a key that can be used to decrypt the piece of content and an identifier of the source of the piece of content;
retrieve, from the source, the piece of content;
decrypt the piece of content using the key; and
save the piece of content locally on the device.

**49.** One or more computer readable media as recited in claim 48, wherein the instructions further cause the one or more processors to verify the piece of content retrieved from the source by using a public key associated with the source to decrypt a digest associated with the piece of content, generating a digest for the piece of content, comparing the generated digest to the decrypted digest, and verifying that the piece of content is from the source and has not been altered if the generated digest and the decrypted digest are the same.

**50.** One or more computer readable media as recited in claim 48, wherein the instructions that cause the one or more processors to save the piece of content comprises instructions that cause the one or more processors to save the content to a local hard drive of the device.

**51.** One or more computer readable media as recited in claim 48, wherein the source is not known to the device prior to receipt of the identifier of the source from the remote device.

**52.** One or more computer readable media as recited in claim 48, wherein the instructions further cause the one or more processors to receive identifiers of a plurality of sources and to select one of the plurality of sources from which to retrieve the piece of content.

**53.** One or more computer readable media as recited in claim 52, wherein each of the plurality of sources has an associated ranking and wherein the instructions that cause the one or more processors to select one of the plurality of sources comprise instructions that cause the one or more processors to select the one of the plurality of sources having the highest ranking.

**54.** One or more computer readable media as recited in claim 48, wherein the device comprises a game console.

**55.** A method, implemented in a computing device, the method comprising:

receiving a request for content from a game console, wherein the computing device was identified to the game console by another device; and
sending the requested content to the game console, wherein the requested content is encrypted using a key communicated to the game console by the other device.

**56.** A method as recited in claim 55, further comprising:

sending, to the game console, a digest of the content, wherein the digest is encrypted using a private key of a public/private key pair associated with the computing device.

**57.** A system comprising:

a selection module configured to receive a request for a piece of content from a device;
a verification module configured to determine whether the device has permission to access the piece of content;

and

wherein the selection module is further configured to pass to the device, if the verification module determines that the device has permission to access the piece of content, both a source of the piece of content and one or more keys that allow the device to decrypt the piece of content.

58. A system as recited in claim 57, wherein the request comprises a request for a referral to a source from which the piece of content can be obtained.

59. A system as recited in claim 57, wherein the verification module determines whether the device has permission to access the piece of content based at least in part on information in the request.

60. A system as recited in claim 57, wherein the verification module determines whether the device has permission to access the piece of content based at least in part on an identifier of the device from which the request is received.

61. A system as recited in claim 57, wherein the verification module determines whether the device has permission to access the piece of content based at least in part on an identifier of one or more users of the device from which the request is received.

62. A system comprising:

means for receiving a content referral request from a device;
means for determining whether the device has permission to access the content; and
the means for receiving the request further comprising means for passing to the device, if the means for determining determines that the device has permission to access the content, both a source of the content and one or more keys that allow the device to decrypt the content.

<u>100</u>

102

GAME CONSOLE

104

REFERRAL SOURCE

108

AUTHENTICATION
MODULE

110

VERIFICATION
MODULE

112

SELECTION
MODULE

114

DATABASE

106

CONTENT SOURCE

116

CONTENT

*Fig. 1*

**140**

REFERRAL SOURCE        GAME CONSOLE        CONTENT SOURCE

```
┌─────────────────┐        ┌─────────────────┐
│ RECEIVE CONTENT │ ◄───── │ ISSUE CONTENT   │
│ REFERRAL REQUEST│   144  │ REFERRAL REQUEST│ 142
└─────────────────┘        └─────────────────┘
        │
        ▼
┌─────────────────┐ 146
│ AUTHENTICATE    │
│ REQUESTER (USER(S)│
│ AND/OR DEVICE)  │
└─────────────────┘
        │
        ▼
┌─────────────────┐ 148
│ VERIFY REQUESTER│
│ CAN ACCESS CONTENT│
└─────────────────┘
        │
        ▼
┌─────────────────┐ 150
│ DETERMINE SOURCE│
│ OF CONTENT      │
└─────────────────┘
        │
        ▼
┌─────────────────┐ 152   ┌─────────────────┐ 154
│ SEND SOURCE     │ ────► │ RECEIVE SOURCE  │
│ IDENTIFIER AND KEY(S)│   │ IDENTIFIER AND KEY(S)│
│ TO GAME CONSOLE │       └─────────────────┘
└─────────────────┘                │
                                   ▼
                   156   ┌─────────────────┐  158 ┌─────────────────┐
                         │ REQUEST CONTENT │ ───► │ RECEIVE CONTENT │
                         │ FROM IDENTIFIED │      │ REQUEST         │
                         │ SOURCE          │      └─────────────────┘
                         └─────────────────┘               │
                                                            ▼
                   162   ┌─────────────────┐  160 ┌─────────────────┐
                         │ RECEIVE REQUESTED│ ◄── │ SEND REQUESTED  │
                         │ CONTENT         │      │ CONTENT TO GAME │
                         └─────────────────┘      │ CONSOLE         │
                                 │                └─────────────────┘
                                 ▼
                   164   ┌─────────────────┐
                         │ VERIFY REQUESTED│
                         │ CONTENT         │
                         └─────────────────┘
                                 │
                                 ▼
                   166   ┌─────────────────┐
                         │ DECRYPT AND INSTALL│
                         │ REQUESTED CONTENT│
                         └─────────────────┘
```

*Fig. 2*

<u>200</u>

202

```
RECEIVE SECURITY TICKET FROM GAME
CONSOLE
```

204

```
MUTUALLY AUTHENTICATE WITH GAME
CONSOLE
```

206

```
MAINTAIN SECURITY ASSOCIATION
INFORMATION FOR GAME CONSOLE,
INCLUDING SESSION SECURITY KEY
```

208

```
DELETE SECURITY ASSOCIATION
INFORMATION FOR GAME CONSOLE
WHEN GAME CONSOLE IS UNAVAILABLE
```

*Fig. 3*

<u>114</u>

*Fig. 4*

EP 1 376 301 A2

302(1)    302(2)    302(n)

306

328  KEY DISTRIBUTION CENTER

NETWORK

106  CONTENT SOURCE

304

310  DATA CENTER (SECURE ZONE)

SECURITY GATEWAY

330  REFERRAL FRONT DOOR

312  MONITORING SERVER(S)

308  PRIVATE NETWORK

104  REFERRAL SOURCE

314  PRESENCE AND NOTIFICATION FRONT DOOR

320  MATCH FRONT DOOR

324  STATISTICS FRONT DOOR

316  PRESENCE SERVER(S)

318  NOTIFICATION SERVER(S)

322  MATCH SERVER(S)

326  STATISTICS SERVER(S)

*Fig. 5*

35

*Fig. 6*

GAME CONSOLE 102

514

CENTRAL PROCESSING UNIT 500

LEVEL 1 CACHE 510

LEVEL 2 CACHE 512

FLASH ROM MEMORY 504

MEMORY CONTROLLER 502

RAM MEMORY 506

3D GRAPHICS PROCESSING UNIT 520

VIDEO ENCODER 522

A/V PORT 528

AUDIO PROCESSING UNIT 524

AUDIO CODEC 526

USB HOST CONTROLLER 530

NW I/F 532

516

ATA CABLE

PORTABLE MEDIA DRIVE 509

HARD DISK DRIVE 508

UI APP — 560

SYSTEM POWER SUPPLY MODULE 550

FAN 552

— 544

DUAL CONTROLLER PORT SUBASSEMBLY 540(1)

FRONT PANEL I/O SUBASSEMBLY 542

DUAL CONTROLLER PORT SUBASSEMBLY 540(2)

CONTROLLER 536(1)

CONTROLLER 536(2)

531

533

CONTROLLER 536(3)

CONTROLLER 536(4)

534(3)

534(7)

MEM. UNIT

MEM. UNIT

534(5)

MEM. UNIT

MEM. UNIT

534(1)

534(2)

534(4)

534(6)

534(8)

*Fig. 7*